(19) **Europäisches Patentamt / European Patent Office / Office européen des brevets**

(11) **EP 4 481 477 A1**

(12) **EUROPEAN PATENT APPLICATION**

(43) Date of publication:
**25.12.2024 Bulletin 2024/52**

(21) Application number: **23315255.2**

(22) Date of filing: **23.06.2023**

(51) International Patent Classification (IPC):
**G02C 7/02** $^{(2006.01)}$

(52) Cooperative Patent Classification (CPC):
**G02C 7/022; G02C 7/024;** G02C 2202/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Essilor International
94220 Charenton-Le-Pont (FR)**

(72) Inventors:
• **Guillot, Matthieu
  92130 ISSY LES MOULINEAUX (FR)**
• **Moisset, Charles
  75014 PARIS (FR)**
• **Hugonneaux, Patrick
  94500 CHAMPIGNY-SUR-MARNE (FR)**
• **Ged, Guillaume
  78180 MONTIGNY-LE-BRETONNEUX (FR)**

(74) Representative: **Jacobacci Coralis Harle
32, rue de l'Arcade
75008 Paris (FR)**

(54) **SPECTACLE LENS**

(57)    Spectacle lens comprising at least:
- a first zone comprising a plurality of micro-optical elements, and
- a second zone comprising a plurality of micro-optical elements,
wherein the first zone comprising at least one first annular part defined by points of the first zone that are at a first angular distance from the first center of the first zone and the second zone comprising at least one second annular part defined by points of the second zone that are at a second angular distance from the second center of the second zone, a logarithm of an integration of values of the point spread function along the first annular part of the first zone differs by less than 15% from a logarithm of an integration of values of the point spread function along the second annular part of the second zone, the first and second angular distances being equal.

Fig.5

**Description**

TECHNICAL FIELD OF THE INVENTION

The invention relates to a spectacle lens for improving visual ability of a wearer, said spectacle lens comprising micro-optical elements.

BACKGROUND INFORMATION AND PRIOR ART

Myopia of an eye is characterized by the fact that the eye focuses light in front of the retina. In other words, a myopic eye presents a length that is not suitable for clear vision. Myopia has both genetic and environmental origins. In the latter case, it develops due for instance to the increase in near vision tasks and in usage of digital devices such as digital screens of computers and smartphones, but also to less outdoor activities.

Many solutions exist that aim at reducing myopia evolution. For example, it is known to use a lens arranged to be worn in front of one eye of a subject and having micro-optical elements comprising optical features adapted to provide evolution control function of the myopia in order to manage the myopia progression and/or to alleviate the discomfort induced by myopia and/or myopia control. These solutions are functional but could alter the visual acuity of the subject.

SUMMARY OF THE INVENTION

In this context, one object of the invention is to provide a spectacle lens comprising at least:

- a first zone comprising a plurality of micro-optical elements arranged to cover at least 30 percent of the total area of the first zone, and
- a second zone comprising a plurality of micro-optical elements arranged to cover at least 30 percent of the total area of the second zone,

wherein the first zone is different from the second zone, and

wherein the first zone comprising at least one first annular part centered on a first center of the first zone and defined by points of the first zone that are at a first angular distance from the first center of the first zone and the second zone comprising at least one second annular part centered on a second center of the second zone and defined by points of the second zone that are at a second angular distance from the second center of the second zone, the first center of the first zone being defined as a point of maximum value of a point spread function of the spectacle lens over (or throughout or over the whole) the first zone, the second center of the second zone being defined as a point of maximum value of the point spread function of the spectacle lens over the second zone, a logarithm of an integration of values of the point spread function along the first annular part of the first zone differs by less than 15% from a logarithm of an integration of values of the point spread function along the second annular part of the second zone, the first angular distance and the second angular distance being equal.

Thanks to the feature of the spectacle lens, the spectacle lens presents a good tradeoff between visual acuity and myopia discomfort and evolution control.

According to an embodiment, the first zone and the second zone have two different sizes.

According to an embodiment, the first zone and the second zone are of same size.

According to an embodiment, the first zone and the second zone are spaced from each other.

Typically, defining at least two zones having a same shape but different orientations or positions in the spectacle lens allows considering a change of a gaze direction. Thus, if the respective point spread function of these two zones are nearly identical, it means that the spectacle lens provides a visual quality nearly stable for different gaze directions defined by the location of the at least two zones.

In addition, defining at least two zones having different sizes allows considering the variation of a usual pupil size of a wearer. Thus, if the respective point spread function of these two zones are nearly identical, it means that the spectacle lens provides a visual quality nearly stable for different luminous environment that the wearer could meet in real life (for example indoor or outdoor activities, etc.).

According to an embodiment, the first zone is different from the second zone if at least one part of the first zone is not also part of the second zone or if at least one part of the second zone is not also part of the first zone.

This can happen for example if:

- the center of the first zone is located at a different position than the center of the second zone for example if they are spaced by at least 0.5 millimeter,
- the shape of the first zone is different from the shape of the second zone,

- the size of the first zone is different from the size of the second zone,
- an orientation of the first zone is different from an orientation of the second zone.

It can also happen when the micro-optical elements in the two zone have different optical features, for example a refractive, diffractive or diffusive function, and/or different dioptric power.

It can also happen when the density of the micro-elements in the first zone differs from the density of the micro-elements in the second zone.

Among these conditions only one is necessary to have a first zone that is different from the second zone. For example, one can have a first zone and a second zone with same shape and size. These zones will be different if another condition is reached, for example if the center of first zone is not collocated with the center of the second zone.

According to an embodiment, the spectacle lens comprises other zones, for example a third zone, a fourth zone, a fifth zone, etc. having each micro-optical elements, said other zones differing from the first zone and from the second zone by at least on feature (for example regarding the density of the micro-optical element in the given zone, and/or the refractive, diffractive or diffusive function of the micro-optical element in the given zone, and/or the size of the given zone, and/or the position of the given zone, and/or the shape of the given zone, and/or orientation of the given zone, etc.).

According to an embodiment, the first annular part is centered on the center of the first zone and the second annular part is centered on the center of the second zone.

According to an embodiment, the first and second angular distances are comprised between 0.01° and 0.20°, said angular distance being defined with respect to the eye rotation center.

According to an embodiment, the first center and the second center are distinct one from the other. It means that the first center is spaced from the second center, for example, by an angular distance of at least 0.001°, or 0.01°.

According to an embodiment, the micro-optical elements of the first zone and the micro-optical elements of the second zone are also arranged such that,

- the point spread function of the first zone has at least one local maximum located at an angular distance from the first center comprised between 0,0107° and 0,0895 ° and/or
- the point spread function of the second zone has at least one local maximum located at an angular distance from the second center comprised between 0,0107° and 0,0895°.

According to an embodiment, the micro-optical elements of the first zone and the micro-optical elements of the second zone are arranged in such a way that the point spread function of the first zone defined along a cross section of the first zone through a first section plane passing through the first center of the first zone and parallel to an optical axis of the spectacle lens has a full width at half maximum that differs by less than 40% from a full width at half maximum of the point spread function of the second zone defined along a cross section of the second zone through a second section plane passing through the second center of the second zone and parallel to the optical axis of the spectacle lens.

According to an embodiment, the point spread function of the first zone along the cross section of the first zone through the first section plane has a full width at half maximum that differs by more than 10% from the full width at half maximum of the point spread function of the second zone along the cross section of the second zone through the second section plane.

According to an embodiment, the point spread function of the first zone along the cross section of the first zone through the first section plane has a full width at 20 percent of a maximum of the point spread function of the first zone along the cross section of the first zone through the first section plane that has at least one of the following features:

- a value that differs by less than 40% from a full width at 20 percent of the maximum of the point spread function of the second zone along the cross section of the second zone through the second section plane,
- a value that differs by more than 5% from the full width at 20 percent of the maximum of the point spread function of the second zone along the cross section of the second zone through the second section plane.

According to an embodiment, the micro-optical elements of the first zone and the micro-optical elements of the second zone are arranged in such a way that the point spread function of the first zone defined along a further cross section of the first zone through a third section plane passing through the first center of the first zone and parallel to an optical axis of the spectacle lens has a full width at half maximum that has at least one of the following features:

- a value that differs by less than 40% from a full width at half maximum of the point spread function of the second zone defined along a further cross section of the second zone through a fourth section plane of the second zone passing through the second center of the second zone and parallel to the optical axis of the spectacle lens;
- a value that differs by more than 10% from the full width at half maximum of the point spread function of the second zone defined along the further cross section of the second zone through the fourth section plane of the second zone.

According to an embodiment, the point spread function of at least one of the zones among the first zone and the second zone has a main peak and at least two secondary peaks positioned on both sides of the main peak.

According to an embodiment, the orthographic projection of the first zone on a projection plane perpendicular to an optical axis of the spectacle lens and the orthographic projection of the second zone on the projection plane have different shapes or different sizes.

According to an embodiment, a geometrical center of the orthographic projection of the first zone is spaced by at least 0.5 millimeter from a geometrical center of the orthographic projection of the second zone.

According to an embodiment,

- the density of the micro-optical elements of the first zone differs by less than 5% from a density of the micro-optical elements of the second zone, and/or
- an average mean optical power of at least one of the micro-optical elements of the first zone is different from an average mean optical power of at least one of the micro-optical elements of the second zone, and/or
- an optical function of at least one of the micro-optical elements of the first zone is different from an optical function of the at least one of micro-optical elements of the second zone and/or
- a diameter of at least one of the micro-optical elements of the first zone differs by less than 5% from a diameter of at least one of the micro-optical elements of the second zone

According to an embodiment, at least one of the micro-optical elements of the first zone and/or the second zone comprises at least one of the following features:

- an average mean optical power value comprised between 1 diopter and 10 diopters;
- a refractive optical function, a diffractive optical function or a diffusive optical function.

According to an embodiment, the micro-optical elements of the first zone are arranged according to a first pattern comprising at least two first concentric rings of micro-optical elements, a first of the at least two first concentric rings of micro-optical elements being spaced from a second of the at least two first concentric rings of micro-optical elements by at least 1 millimeter and/or

the micro-optical elements of the second zone are arranged according to a second pattern comprising at least two second concentric rings of micro-optical elements, a first of the at least two second concentric rings of micro-optical elements being spaced from a second of the at least two second concentric rings of micro-optical elements by at least 1 millimeter

According to an embodiment, at least one of the micro-optical elements of the first zone is spaced from at least another of the micro-optical elements of the first zone or of the micro-optical elements of the second zone by at least 0,3 millimeter.

According to an embodiment, each micro-optical element is spaced from the other micro-optical elements by at least 0,4 millimeter.

According to an embodiment, each micro-optical element is spaced from the other micro-optical elements by at least 0,1 millimeter, or by at least 0.2 millimeter, or by at least 0.3 millimeter, or by at least 0.4 millimeter, or preferably by at least 0.5 millimeter, or by at least 0.6 millimeter, or by at least 0.7 millimeter, or by at least 0.8 millimeter, or by at least 0.9 millimeter, or by at least 1 millimeter.

A further object of the invention is to provide a vision compensation spectacles comprising a frame and two spectacle lens according to the present disclosure.

In the present disclosure, the density of the micro-optical elements over a predetermined zone of the lens element can be defined as the ratio between the total surface of the micro-optical element and the area of the predetermined zone.

According to an embodiment, the density of the micro-optical elements in a given zone is higher than 30%, or higher than 40%, or higher than 50%, or higher than 60%, or higher than 70%, or higher than 80%, or higher than 90%.

According to an embodiment, the density of the micro-optical elements in a given zone of the spectacle lens is at least of 30%, typically comprised:

- between 30% and 50% (comprising any value 30%, 35%, 40%, 45%, etc.), or comprised between 40% and 50% when the micro-optical elements are not contiguous;
- between when 60% and 100% (comprising any value 65%, 70%, 80%, 85%, 90%, 95% etc.), or between 70% and 100%, or between 80% and 100% when the micro-optical elements are contiguous.

According to an embodiment, at least one of the micro-optical elements of the first zone and/or the second zone comprises at least one of the following features:

- an average mean optical power value comprised between 1 diopter and 10 diopters;

- a refractive optical function, a diffractive optical function or a diffusive optical function.

According to an embodiment, the micro-optical elements of the first zone are arranged according to a first pattern comprising at least two first concentric rings of micro-optical elements, a first of the at least two first concentric rings being spaced from a second of the at least two first concentric rings by at least 1 millimeter and/or
the micro-optical elements of the second zone are arranged according to a second pattern comprising at least two second concentric rings of micro-optical elements, a first of the at least two second concentric rings being spaced from a second of the at least two second concentric rings by at least 1 millimeter.

According to an embodiment, at least one of the micro-optical elements of the first zone is spaced from at least another of the micro-optical elements of the first zone or at least of the micro-optical elements of the second zone by at least 0,3 millimeter.

In the present disclosure, the wording "first zone", "second zone", "third zone", "fourth zone", "fifth zone" and "sixth zone" is not limitative and allows distinguishing different zones of the spectacle lens according to the present disclosure.

DETAILED DESCRIPTION OF EXAMPLE(S)

The following description with reference to the accompanying drawings will make it clear what the invention consists of and how it can be achieved. The invention is not limited to the embodiment/s illustrated in the drawings. Accordingly, it should be understood that where features mentioned in the claims are followed by reference signs, such signs are included solely for the purpose of enhancing the intelligibility of the claims and are in no way limiting on the scope of the claims.

In the accompanying drawings:

- Figure 1 shows a schematic perspective view of spectacles comprising a pair of lenses according to the present disclosure;
- Figure 2 shows a schematic axial cut view of a spectacle lens according to the present disclosure;
- Figure 3 shows a schematic perspective half-view of a spectacle lens according to the present disclosure;
- Figure 4 shows a front view of a first example of a spectacle lens according to the present disclosure, when projected into a facial plane (i.e. projection plane AA) perpendicular to the main axis of the spectacle lens;
- Figure 5 shows an expended view of a part of the spectacle lens shown on figure 4;
- Figure 6 shows a graphical representation of the point spread function of the spectacle lens computed in the first zone of the spectacle lens according to the first example;
- Figure 7 shows a graphical representation combining a view of the point spread function shown on figure 6 along a cross section of the first zone through a first section plane and a view of the point spread function shown on figure 6 along a further cross section of the first zone through a third section plane of the first zone, said first section plane and third section plane of the first zone being orthogonal;
- Figure 8 shows a graphical representation of the point spread function of the spectacle lens computed in the second zone of the spectacle lens according to the first example;
- Figure 9 shows a graphical representation combining a view of the point spread function shown on figure 8 along a cross section of the second zone through a second section plane of the second zone and a view of the point spread function shown on figure 8 along another cross section of the second zone through a fourth section plane of the second zone, said second section plane and fourth section plane of the second zone being orthogonal;
- Figure 10A shows another expended view of another part of the spectacle lens according to a second example;
- Figure 10B shows a schematic axial cut view of a spectacle lens according to the second example;

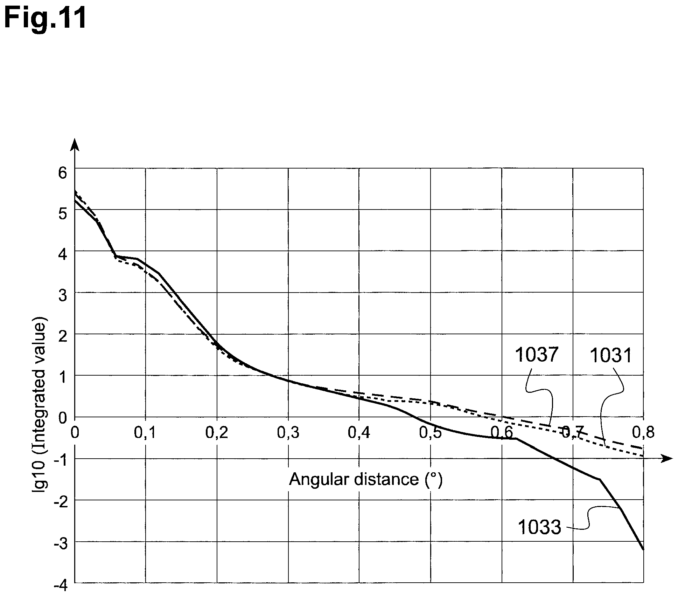

- Figure 11 shows a graphical representation of a first variation of logarithms of integrations of values of the point spread function measured from annular parts comprised in the first zone as a function of angular distances, a second variation of logarithms of integrations of values of the point spread function measured from annular parts comprised in the second zone as a function of angular distances, a third variation of logarithms of integrations of values of the point spread function measured from annular parts comprised in the third zone as a function of angular distances, said first, second and third zones being comprised in the spectacle lens according to the second example;
- Figure 12 shows a schematic view of a system used to measure the point spread function according to the present disclosure;
- Figure 13 shows a front view of a third example of a spectacle lens according to the present disclosure, when projected into a projection plane (i.e. facial plane, BB) perpendicular to the main axis of the spectacle lens;
- Figure 14 shows an expended view of a part of the spectacle lens shown on figure 13;
- Figure 15 shows an expended view of a part of a spectacle lens according to a fourth example;
- Figure 16 shows a graphical representation of the point spread function of the spectacle lens computed in the first zone of the spectacle lens according to the fourth example;

- Figure 17 shows a graphical representation combining a view of the point spread function shown on figure 16 along a cross section of the first zone through a first section plane of the first zone and a view of the point spread function shown on figure 16 along another cross section of the first zone through another third section plane of the first zone, said first section plane and third section plane of the first zone being orthogonal;
- Figure 18 shows a graphical representation of the point spread function of the spectacle lens computed in the second zone of the spectacle lens according to the fourth example;
- Figure 19 shows a graphical representation combining a view of the point spread function shown on figure 18 along a cross section of the second zone through a second section plane and a view of the point spread function shown on figure 18 along a cross section of the second zone through a fourth second section plane, said second section plane and fourth section plane of the second zone being orthogonal;
- Figure 20 shows another expended view of another part of the spectacle lens according to the fifth example;

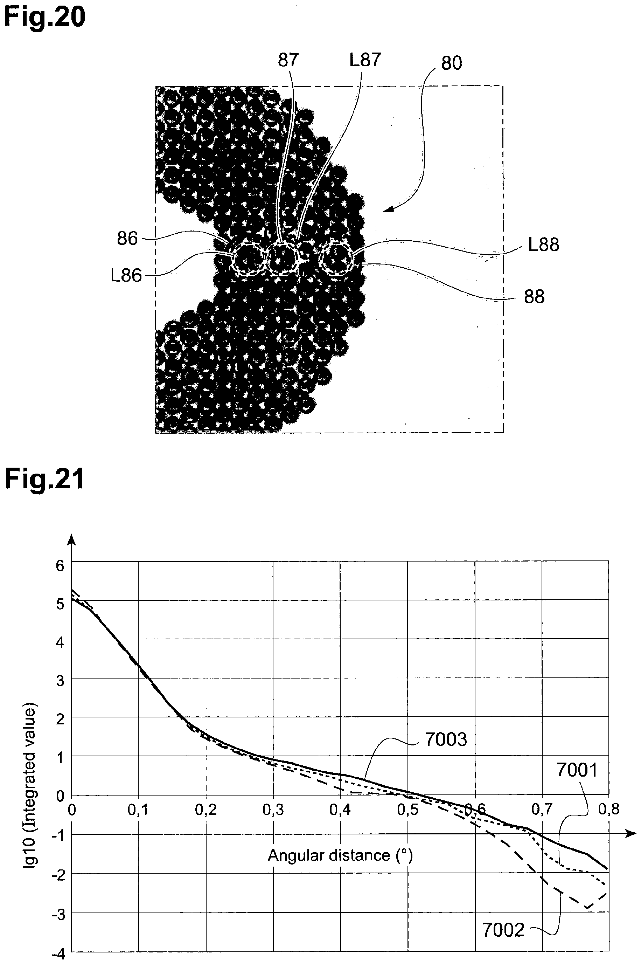

- Figure 21 shows a graphical representation of a first variation of logarithms of integrations of values of the point spread function measured from annular parts comprised in the first zone as a function of angular distances, a second variation of logarithms of integrations of values of the point spread function measured from annular parts comprised in the second zone as a function of angular distances, a third variation of logarithms of integrations of values of the point spread function measured from annular parts comprised in the third zone as a function of angular distances, said first, second and third zones being comprised in the spectacle lens according to the fifth example;
- Figure 22 shows an expended view of a part of a spectacle lens according to a sixth example;

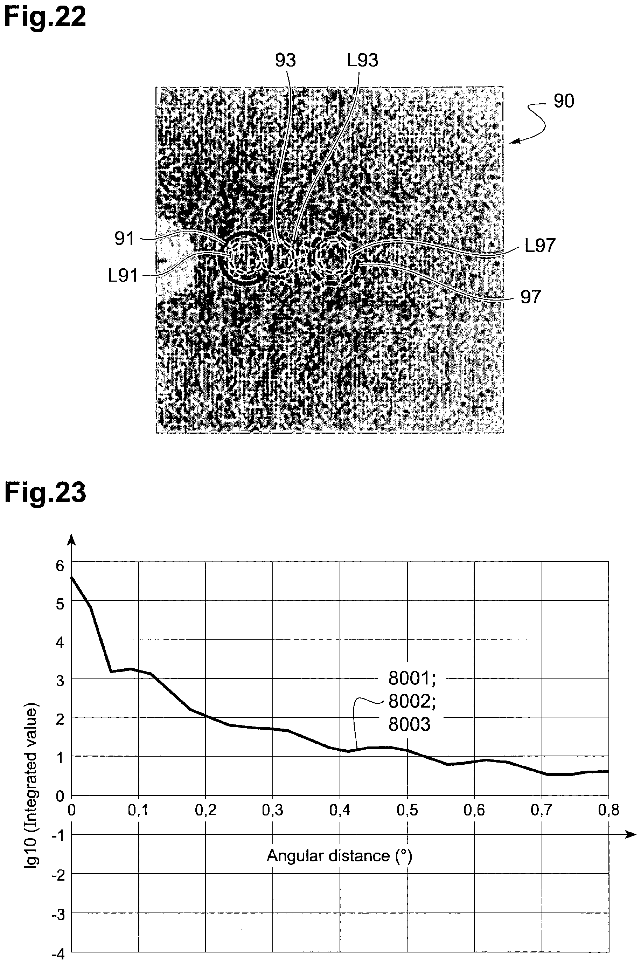

- Figure 23 shows a graphical representation of a first variation of logarithms of integrations of values of the point spread function measured from annular parts comprised in the first zone as a function of angular distances, a second variation of logarithms of integrations of values of the point spread function measured from annular parts comprised in the second zone as a function of angular distances, a third variation of logarithms of integrations of values of the point spread function measured from annular parts comprised in the third zone as a function of angular distances, said first, second and third zones being comprised in the spectacle lens according to the sixth example;
- Figure 24 shows a computer-implemented method according to the present disclosure for determining a spectacle lens according to the several examples disclosed above ;
- Figure 25 shows a method according to the present disclosure for manufacturing a spectacle lens according to the several examples disclosed above.

Device

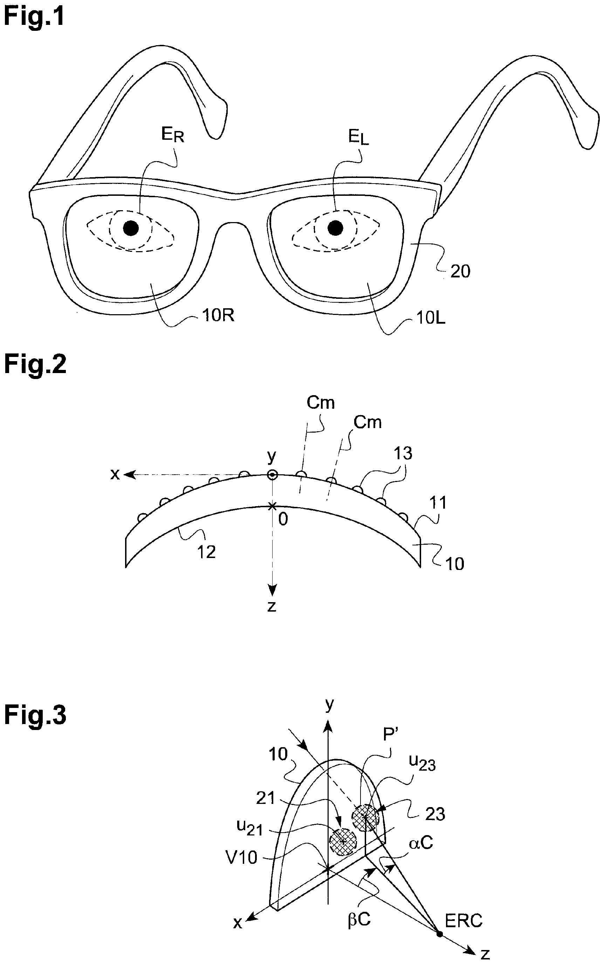

Figures 1 to 3 show a spectacle lens 10 according to the present disclosure.

The spectacle lens 10 is here a concave lens comprising a convex front face 11 and a concave rear face 12, but could alternatively be a concavo-convex lens or a plano-convex lens.

As shown on figure 1, two similar spectacle lenses 10, namely a right spectacle lens 10R and a left spectacle lens 10L are intended to be mounted on a frame 20 of spectacles in order to be positioned in front of the right eye $E_R$ and the left eye $E_L$ of the wearer. The combination of the two similar spectacle lenses 10 and the frame is also known as eyewear or eyeglasses

The spectacle lens 10 illustrated by figure 2 has two opposite optical faces, the front face 11 directed towards an object side and the rear face 12 that is closest to the eye $E_R$, $E_L$ of the wearer. The spectacle lens 10 presents a center V10, which is typically the optical or geometrical center of the spectacle lens 10.

The spectacle lens 10 has an optical design comprising a macro-optical component and a micro-optical component.

The macro-optical component of the optical design (also referred to as "macro-optical design") provides a macro-optical function providing at least one global refractive power over most or all the useful surface of the spectacle lens 10, to provide the wearer's eye a dioptric correction adapted to the dioptric correction need of the wearer in wearing conditions. For example, this macro-optical function is provided by the geometry of the front face 11 or of the rear face 12 or of both faces, typically by adapting the curvature radii of one or both faces of the spectacle lens. The refractive power of the spectacle lens 10 is generally comprised between $\pm 15$ diopters.

The refractive power provided by the macro-optical design comprises at least a spherical power and may also comprise a cylindrical power, a prismatic deviation power, according to the wearer's correction need determined by an eye care professional in order to correct the vision defects of the wearer. Typically, the global refractive power corresponds to the dioptric correction based on a prescription of the wearer, for example in standard wearing conditions. For example, the prescription for an ametropic wearer comprises the values of optical power and of astigmatism comprising a cylinder and an axis for distance vision and/or for near vision.

The spectacle lens defined according to the present disclosure is adapted to correct the vision of an individual (i.e. a wearer) in wearing conditions. The wearing conditions are to be understood as the position of the spectacle lens 10 in a spectacle frame 20 worn by the wearer in front of its eyes. The wearing conditions are defined according to physiological parameters of the wearer or to geometrical parameters of the frame 20 when the frame 20 is worn by the wearer. The wearing conditions comprise a pantoscopic angle, a cornea to lens distance, a pupil to cornea distance, an eye rotation center (ERC) to pupil distance and a wrap angle. Figure 1 shows a pair of spectacle lenses, numbered 10R and 10L. The spectacle lens 10R is worn in front of the right eye $E_R$ of the wearer and the spectacle lens 10L is worn in front of the left eye $E_L$ of the wearer.

In the present disclosure, the distance between the rear face 12 and the ERC defined along the optical axis z of the spectacle lens is of 26 mm and the rear face of the spectacle lens is spaced from 1.00 millimeter from the front face of the spectacle lens. The distance from the pupil of the eye to the front face of the spectacle lens is about 13 mm. Of course, this value is given as guidance, but this value is subject to change from one person to another.

An example of standard wearing conditions may be defined by a pantoscopic angle of -8° for an adult or between 0° and 5° for a child, a cornea to lens distance of 12 mm, a pupil to cornea distance of 2 mm, an ERC to pupil distance of 11.5 mm and a wrap angle of 0°.

The pantoscopic angle is the angle in a vertical plane between the normal to the rear surface 12 of the spectacle lens 10 and the visual axis of the eye (axis A) in a primary position, defined as a horizontal direction, when the wearer gazes straight ahead at infinity.

The cornea to lens distance is the distance along the visual axis of the eye E in a primary position between the cornea and the rear surface 12 of the spectacle lens 10.

The wrap angle of the spectacle frame 20 is the angle in the horizontal plane between the normal to the rear face 12 of the lens at its center and the sagittal plane.

The micro-optical component of the optical design (also referred to as "micro-optical design") of the spectacle lens 10 is made of several micro-optical elements 13 arranged on at least one of the front and rear faces of the lens, preferably the convex front face.

Each micro-optical element has its own optical function and has small dimensions of less than 2 mm, preferably less than 1 mm. Each micro-optical element consists for example in a microlens, a Pi-Fresnel lens, a prism, a diffuser, a beam-splitter or a diffraction grating. The micro-optical elements are typically formed by photolithography, holography, molding, machining or encapsulation.

This arrangement of all the micro-optical elements provides a micro-optical function which is distinct from and complements the macro-optical function. Thus, the global optical function of the spectacle lens 10 is the addition of its macro-optical function and of its micro-optical function respectively provided by the macro-optical and micro-optical components of its optical design. The micro-optical function of the spectacle lens 10 is the optical function provided by the spectacle lens 10 without its macro-optical design, that is without any global refractive power over most or all the useful radial width of the spectacle lens 10. The macro-optical function of the spectacle lens 10 is the optical function provided by the spectacle lens 10 without its micro-optical design, that is without any micro-optical element.

Each micro-optical element provides a refractive, diffractive or diffusive function.

In an embodiment, a part or all of the micro-optical elements are refractive micro-optical elements. Each refractive micro-optical element can comprise a monofocal or a bifocal spherical dioptric power.

In another embodiment, a part or all of the micro-optical elements are diffractive. Each diffractive micro-optical element comprises for example a diffractive Pi-Fresnel micro-lens. A diffractive Pi-Fresnel micro-lens has a phase function, which presents $\pi$ phase jumps at the nominal wavelength $\lambda 0$. The wavelength $\lambda 0$ is preferably 550 nm for human eye vision applications. The diffractive Pi-Fresnel micro-lens presents an optical axis passing through the optical center of the microlens. The micro-lens with diffractive Pi-Fresnel micro-optical elements mainly diffracts in two diffraction orders associated with two dioptric powers $P0(\lambda 0)$ and $P1(\lambda 0)$. Thus, when receiving collimated light, the micro-lens concentrate light on two distinct areas on their axis.

For example, the dioptric power $P0(\lambda 0)$ is comprised in a range of +/-0.12 diopter in addition to a sphero-torical power of the predetermined refractive power of the spectacle lens, deriving for example from a prescription for the wearer.

According to an embodiment, the dioptric power $P1(\lambda 0)$ is comprised in absolute value between 1 diopter and 10 diopters. Preferably, the dioptric power $P1(\lambda 0)$ is comprised between $\pm 2$ diopters and $\pm 6$ diopters.

As an alternative, all or a part of the micro-optical element are diffusive micro-optical elements. Each diffusive micro-optical element is configured for scattering the light. For example, a collimated light is scattered in a cone with an apex angle ranging from +/-1° to +/- 40°. In an example, the diffusive micro-optical elements are adapted to scatter light locally, i.e. at the intersection between the given micro-optical element and the wavefront arriving on the given micro-optical element. The micro-optical elements having a diffusive optical function may be similar to the micro-optical elements described in the document US10302962.

Each micro-optical element 13 has a micro-optical axis Cm. Typically, the micro-optical axis Cm of a given micro-optical element corresponds to the axis of revolution or to the optical axis of the micro-optical element.

In the example illustrated, all the micro-optical elements 13 are located on the front face 11 of the spectacle lens 10.

Alternatively, all or a part of the micro-optical elements can be located on the rear face 12 or on both front face 11 and rear face 12 of the spectacle lens 10.

Alternatively, all or a part of the micro-optical elements can be embedded in the thickness of the spectacle lens between its front and rear faces.

In practice, the micro-optical elements are formed as a single integral part with the rest of the spectacle lens (typically by injection molding, press-molding, rolling or machining) or, as an alternative, on a film (forming of a patch or laminated) applied over one or both of the front face 11 and the rear face 12 of the spectacle lens 10.

The spectacle lens 10 is arranged for controlling the myopia growth.

In a non-limitative example, the arrangement of the micro-optical elements 13 of the spectacle lens 10 has optical features to provide an evolution control function of the myopia for the eye of the wearer. In other words, the micro-optical elements 13 of the spectacle lens 10 have each optical features adapted to control the myopia growth.

According to an embodiment, the arrangement of the micro-optical elements of the spectacle lens is adapted to provide a specific spatial distribution of blur also called defocus effect. To this end, the micro-optical elements comprise micro-lenses providing a refractive power that differs from the refractive power of the macro-optical component the optical design of the spectacle lens 10.

As shown on figure 3, the spectacle lens 10 comprises an ophthalmic lens center V10, which is typically the optical or geometrical center of the spectacle lens 10. The spectacle lens 10 is also defined with a first orthogonal frame of reference (V10, x, y, z), for which the transverse axis z passe through the eye rotation center ERC of the eye E of the wearer. In the following example, the transverse axis z of the spectacle lens corresponds to the optical axis of the spectacle lens.

As illustrated by figure 3, a central vision gaze direction is defined by two angles ($\alpha$C, $\beta$C) representing the eye rotation from a primary gaze direction. More precisely, the angles $\beta$C and $\alpha$C represent respectively the horizontal and vertical rotation angles applied at the eye rotation center ERC in a Fick system to move the eye from the primary gaze reference axis to the eye gaze axis. A third torsional rotation of the eye derived from these two angles is applied so that the eye gaze axes respect Listing law. Figure 3 illustrates an example for the angles $\alpha$C and $\beta$C with respect to the eye rotation center ERC and the spectacle lens 10. The central vision gaze direction can be represented by a line passing through the eye rotation center ERC.

The angle $\alpha$C is defined in the vertical plane passing through the eye rotation center ERC, while the angle $\beta$C is defined in the horizontal plane passing through the eye rotation center ERC. The angle $\alpha$C is defined as positive when the wearer's eye looks down and negative when the wearer's eye looks up. The angle $\beta$C is defined as positive when the wearer's eye looks to the nasal side and negative when the wearer's eye looks to the temporal side.

In the present disclosure different zones of the spectacle lens will be presented. Generally, the different parameters related of these different zones are determined or defined based on a projection of the zones on a plane perpendicular to an optical axis of the spectacle lens

## First example

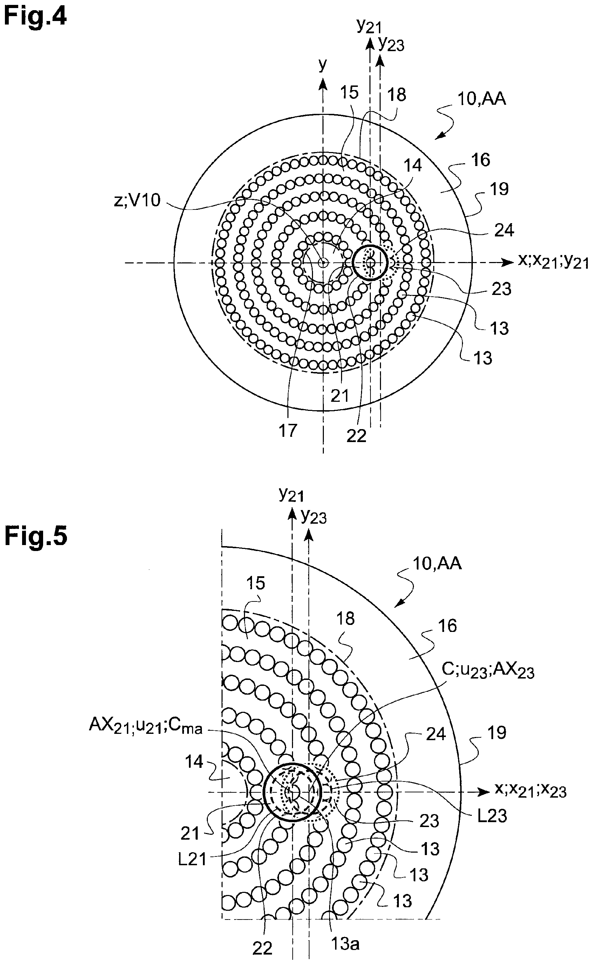

It will be disclosed in relation with figures 4 to 9 a first example of the spectacle lens 10 according to the present disclosure. The elements shown on figures 4 and 5 are orthographic projections. Same applies for the other examples of the present disclosure when the spectacle lens is projected into a projection plane. Therefore, each zone or elements illustrated on these figures (projected figures) is an orthographic projection of the given zone of the spectacle lens or orthographic projection of the given element. For sake of simplicity, the wording "orthographic projection" is not used for the description of the spectacle lens illustrated on a projection plane.

The figures 4 and 5 only represent an example of the arrangement of the micro-optical elements on the spectacle lens. Some other arrangements are possible for example the ones presented in the figures 11, 12 and 17. As it will be disclosed below, the micro-optical elements may not be necessarily arranged on concentric rings and the micro-optical element may be, in other embodiments, not contiguous.

The spectacle lens 10 shown on figure 4 comprises a central zone 14 which is free of any micro-optical element, and which has a circular outline 17, for example of 4.5 millimeters in radius, centered on the ophthalmic center V10 of the spectacle lens 10. In a variant, the outline of the central zone 14 can present another shape, such as a polygonal (in particular hexagonal) or oval shape.

The spectacle lens 10 further comprises a first peripheral zone 15 arranged around the central zone 14 and a second peripheral zone 16 arranged around the first peripheral zone 15.

In the example of the figure 4, the arrangement of the micro-optical elements 13 of the spectacle lens 10 is disposed on the first peripheral zone 15. The second peripheral zone 16 is free of any micro-optical element.

By first or second "peripheral zone" it is meant a specific area of the spectacle lens.

The second peripheral zone 16 of the spectacle lens 10 is arranged to be fixed to the spectacle frame 20.

The central zone 14, the first peripheral zone 15 and the second peripheral zone 16 are concentric. They are centered on the optical center of the spectacle lens 10. The first peripheral zone 15 surrounds the central zone 14 and is bounded internally by the circular outline 17 of the central zone 14 and externally by a circular outline 18. The second peripheral zone 16 surrounds the first peripheral zone 15 and is bounded internally by the circular outline 18 of the first peripheral zone 15 and externally by a circular outline 19 which can coincide with an outer edge of the spectacle lens 10 as shown on figure 4.

In a non-limitative example, the circular outline 17 (which is the outer outline of the central zone 14 and the inner outline of the first peripheral zone 15) presents a radius between 2,00 millimeters and 5 millimeters, preferably between 3 and 4.5 millimeters.

Preferably, the outline 18 (which is the outer outline of the first peripheral zone 15 and the inner outline of the second peripheral zone 16) presents a diameter between 40.0 millimeters and 80.0 millimeters, preferably between 50.00 millimeters and 70.0 millimeters. It is for example of example 60.0 millimeters in this embodiment. The outer circular outline 19 (which is the outer edge of the spectacle lens) of the second peripheral zone 16 presents a diameter between 80 millimeters and 100.00 millimeters (comprising any value between 80.00 millimeters and 100.00 millimeters), preferably of 70.00 millimeters as shown in the illustrated example.

Of course, although that the outline 17 of the central zone 14, the outline 18 of the first peripheral zone 15 and the outline 19 of the second peripheral zone 16 are circular in this example, they can present another shape, such as a polygonal (in particular hexagonal) or oval shape. Typically, the form of the outline the outline 17 of the central zone 14, the outline 18 of the first peripheral zone 15 and the outline 19 of the second peripheral zone 16 depend on the form of the spectacle lens 10.

In the example shown on figures 4 and 5, the micro-optical elements 13 are arranged according to concentric rings of adjacent micro-optical elements 13 centered on a center of the central zone 14 that coincide with the center V10 of the spectacle lens 10. In this embodiment, the number of the concentric rings depends on the size and the shape of the spectacle lens 10. Therefore, the spectacle lens 10 according to the first example may comprises other rings (at least two rings), for example six, or seven, or eight, etc. rings. Each ring is spaced between 1.0 millimeter and 1.5 millimeters from each neighboring ring. On figure 4, the spectacle lens 10 comprises five concentric rings of micro-optical elements.

In this embodiment, the micro-optical elements of the spectacle lens 10 are microlenses and are all identical. Here, each micro-optical element 13 presents a mean power of about +4.5 diopters and are aspherical micro-optical elements. Each micro-optical element has a diameter of about 1.12 millimeters and a curvature radius of 131.3 millimeters. The mean power of the micro-optical elements is in addition to the prescription correction of the spectacle lens 10.

By spherical mean power, it is meant that the spherical dioptric power of the micro-optical element can vary on the surface of the spectacle lens 10. For example, in this embodiment, the micro-optical elements belonging to a same ring of micro-optical elements have a same mean dioptric power, whereas the micro-optical elements belong to different rings of micro-optical elements can have a different mean dioptric power.

On figures 4 and 5, the first peripheral zone 15 comprises a first zone 21 having a circular shape of 4 millimeters in diameter.

The first zone 21 comprises a portion or a part of the micro-optical elements of the first peripheral zone 15. Typically, the micro-optical elements comprised in the first zone 21 are arranged to cover at least 30 percent of the total area of the first zone 21. Here, the density of the micro-optical elements in the first zone 21 is higher than 31 percent.

The first zone has an outer outline 22 presenting a geometrical center U21. Typically, the geometric center U21 of the first zone 21 is spaced by at least 4 millimeters from the ophthalmic center V10 of the spectacle lens 10. On figure 5, the geometric center U21 of the first zone 21 is aligned on the main axis x of the spectacle lens and it is spaced by 9.8 millimeters from the ophthalmic center V10 of the spectacle lens 10. In the following, the first zone 21 is defined with an orthogonal frame of reference (U21, x21, y21). Therefore, the axis x of the spectacle lens 10 and the axis x21 of the first zone 21 are aligned on a same line.

In the present disclosure, the distance between the ophthalmic center V10 of the spectacle lens 10 and the geometric center of any zone defined in the first peripheral zone 15 is referred to as eccentricity. Of course, in a variant, the first zone 21 can be positioned at other eccentricities.

On figures 4 and 5, the geometrical center $u_{21}$ is centered on the micro-optical axis Cm of one of the micro-optical elements comprised in the first zone 21. Here, the geometric center $u_{21}$ is centered on the micro-optical axis Cma a micro-optical element 13a arranged on the second ring of the spectacle lens 10 starting from the center V10 of the spectacle lens 10. Of course, in a variant, the first zone 21 can be centered on any micro-optical element of the first peripheral zone 15 of the spectacle lens 10.

The first peripheral zone 15 further comprises a second zone 23 having a circular shape of 4 millimeters in diameter.

The second zone 23 comprises a portion or a part of the micro-optical elements of the first peripheral zone 15. Typically, the micro-optical elements comprised in the second zone 23 are arranged to cover at least 30 percent of the total area of the first zone.

In this first example, the density of the micro-optical elements of the first zone 21 differs by less than 30%, preferably by less than 20%, preferably by less than 10% of the density of the micro-optical elements of the second zone 23.

Here, the density of the micro-optical elements in the second zone 23 is higher than 40 percent. The position of the micro-optical elements comprised in the second zone 23 differs from the position of the micro-optical elements comprised in the first zone 21.

In this first example, the density of the micro-optical elements of the first zone 21 differs by more than 1%, preferably by more than 5% of the density of the micro-optical elements of the second zone 23.

Therefore, the first zone 21 has at least one feature (for example here the density of the micro-optical elements) that differs from the features of the second zone 23 (here the density).

The second zone 23 has an outer outline 24 presenting a geometrical center $u_{23}$. Typically, the geometric center $u_{23}$ of the second zone 23 is spaced by at least 4 millimeters from the ophthalmic center V10 of the spectacle lens 10. On figure 5, the geometric center $u_{23}$ of the second zone 23 is aligned on the main axis x of the spectacle lens 10 and it is spaced by 10.95 millimeters from the ophthalmic center V10 of the spectacle lens 10. In the following, the second zone 23 is defined with an orthogonal frame of reference ($u_{23}$, x23, y23). Therefore, the axis x of the spectacle lens 10, the axis x21 of the first zone 21, and the axis x23 of the second zone 23 are aligned on a same line.

The geometric center $u_{23}$ of the second zone 23 is centered on a point C positioned on a portion of the first peripheral zone 15 that is free of micro-optical element. Typically, the geometric center $u_{23}$ is centered on the point C positioned at the middle of two adjacent rings of micro-optical elements, here at the middle of the second and the third rings of micro-optical elements starting from the center V10 of the spectacle lens 10. Thus, the geometrical center $u_{23}$ of second zone 23 is spaced from the geometric center $u_{21}$ of the first zone 21 by at least 0.5 millimeter, here by at least 1.0 millimeter. Typically, in this example, the axis y21 of the first zone 21 is spaced from the axis y23 of the second zone 23 by at least 1.0 millimeter.

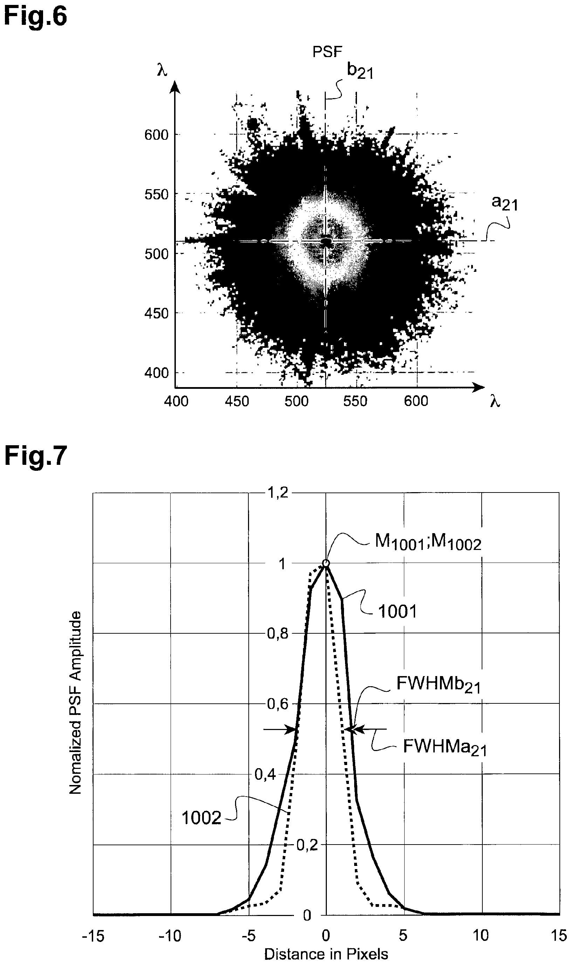

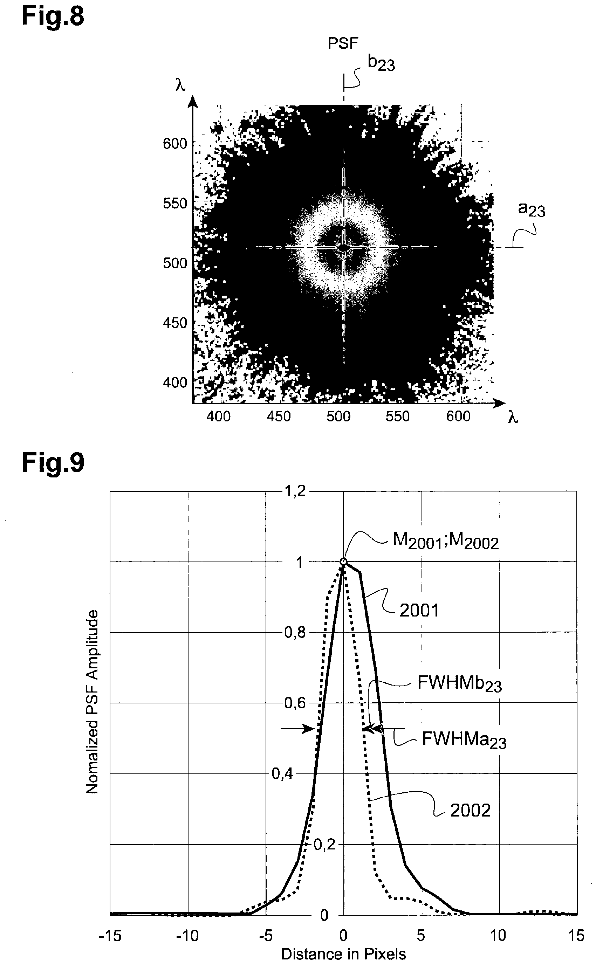

It will be disclosed, with reference to figures 6 and 9, technical features of the first 21 and second 23 zones. The technical features of the first zone 21 and second zone 23 are defined by their point spread function.

In the present disclosure, the Point Spread Function (PSF) gives the degree of spreading (blurring) in the image of a point object throughout a selected zone of the spectacle lens 10.

The point spread functions of this example are computed on the first 21 and second 23 zones.

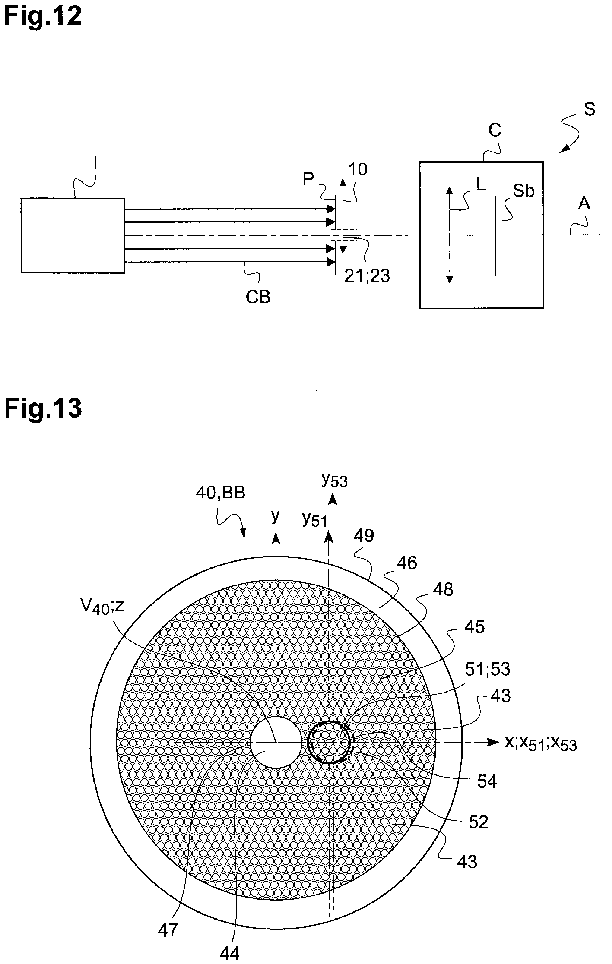

In the following disclosure, the point spread function can be directly measured using an optical system S as described on figure 12.

The system S comprises a light capturing device C, a light emitting device I configured to generate a collimated beam CB of light, and an aperture P positioned on the spectacle lens 10 or very close to spectacle lens 10 and used as a diaphragm to delimit the first zone 21 or the second zone 23 on which the point spread function is measured. Only the rays of the collimated beam passing through the aperture P reach the light capturing device. Here, the aperture P is positioned on or in front of the front face F1 of the spectacle lens 10. In a variant of the system S, the aperture P may be positioned on the rear face F2 of the spectacle lens 10 or behind the rear face F2 of the spectacle lens 10.

On figure 12, the spectacle lens 10 is positioned between the light emitting device I and the light capturing device C. The light emitting device I, the aperture P, the spectacle lens 10 and the light capturing device C are aligned.

The light source I is a laser source emitting in the monochromatic or polychromatic visible spectrum between 400 nm and 780 nm ($\lambda$), with a high-quality factor $M^2$ close to 1. Advantageously, the collimated beam emitted by the light source I has a wavelength between 540 to 560 nm, preferably a wavelength of 550 nm.

The collimated beam CB is generated by the light emitting device I along an axis A sensibly perpendicular to a plane normal to the surface of the spectacle lens 10 and centered on the geometrical center $U_{21}$ of the first zone 21 or on the geometrical center $U_{23}$ of the second zone 23. As shown on figure 12, the collimated beam illuminates the whole area of the first zone 21 or second zone 23 of the spectacle lens 10.

On figure 12, the spectacle lens 10 can be moved along a plane perpendicular to the axis A to select different specific zones of the spectacle lens 10 so as to measure the point spread function on different portions of the spectacle lens 10, here typically to select the first zone 21 and then the second zone 23.

As the spectacle lens 10 is illuminated by a collimated beam the distant between the light emitting device I and the spectacle lens 10 can vary without changing substantially the determined modulation transfer function.

The light capture device C comprises at least a lens L and an image sensor Sb. The position of the lens L and the position of the sensor Sb can be adjusted in order to consider different analysis planes, for example to scan the spectacle lens 10 along the axis z (transverse axis). Typically, the distance between the rear face (along the main axis z) of the spectacle lens and the surface of the sensor can be of 26 mm. This distance can be changed to scan the spectacle lens along the x axis.

The sensor Sb is configured to capture the image obtained by the collimated light beam generated by the light source I, and that is passed through the spectacle lens 10. Based on this captured image, one can determine the Point Spread Function (PSF).

In another embodiment, the point spread function of the first zone 21 or second zone 23 of the spectacle lens 10 is determined by measuring a surface relief of the face of the spectacle lens 10 comprising the micro-optical elements, here the front face 11 of the spectacle lens 10. Typically, the surface relief of the face can be determined using an interferometer. The difference of the optical path lengths of two points belonging to the selected zone (first 21 or second zone 23) is determined. To this end, the Optical Path Difference (OPD) of each point of the surface of the spectacle lens 10 can be obtained by multiplying a surface relief noted Z(x,y) with a refractive index-changing $\Delta n$ corresponding to the difference of refractive index between both materials on either side of the surface with micro-optical elements. In a variant, one can compute the Point Spread Function in different planes of the spectacle lens 10.

In a variant, simulated point spread function are estimated before the manufacturing process of the spectacle lens 10. In that case, the first zone 21 or the second zone 23 of the spectacle lens 10 is selected by a simulated aperture P' (i.e. a diaphragm) positioned on the optical design of the spectacle lens 10 or by projecting the pupil P' of the eye on the spectacle lens 10. In both cases, the diaphragm P' or the projection has a center that is centered on a potential central vision gaze of the wearer, for example for potential central vision gazes of the wearer comprised between 0 and 20 degrees defined from the two radial directions (axis x, y) of the spectacle lens 10. As shown on figure 3, the aperture P' is centered on a point disclosing a central vision gaze direction defined with the two angles ($\alpha$C, $\beta$C). The aperture P' has a shape that coincides with the shape of the first zone 21 or the second zone 23. Thus, the aperture P' presents a geometric center that coincides with the geometric center U21 of the first zone 21 when the modulation transfer function is estimated through the first zone 21 and the aperture P' presents a geometric center that coincides with the geometric center U23 of the second zone 23 when the modulation transfer function is estimated through the second zone 23.

In the present disclosure, the diaphragm P or the simulated aperture P' has a center that is centered on a potential central vision gaze of the wearer, for example for potential central vision gazes of the wearer comprised between 0 and 20 degrees defined from two directions (axis x and axis y) of the spectacle lens 10. Typically, such angles correspond to points spaced from the center V10 of the spectacle lens 10 by a distance comprised between 0 millimeter and 30 millimeters corresponding typically to the gaze position in the spectacle lens 10 during reading with single vision lenses.

As for the method explained above, it is possible to compute the point spread function on different specific zones (here the first zone 21 and the second zone 23) of the simulated spectacle lens 10 by spatially scanning the field of view of the spectacle lens 10 using simulated aperture P' or projection P' defined for several central vision gaze directions. It allows measuring the point spread function for different eccentricities of the vision gaze direction. In the present disclosure, the aperture P' delimiting a specific zone (here the first zone 21 or the second zone 23) has a circular shape having a diameter comprised between 4 millimeters and 8 millimeters to simulate the variation of the usual pupil size of a wearer, especially for simulated different luminous environments.

The density of the micro-optical elements comprised over the portion selected via the aperture (here the first zone 21 or second zone 23) is at least of 30%, typically comprised between 60% and 100% when the micro-optical elements are contiguous and comprised between 30% and 50% when the micro-optical elements are not contiguous.

Here, the Point Spread Function giving the degree of spreading (blurring) in the image of a point object throughout the first zone 21 and second zone 23 of the spectacle lens 10 is computed.

The Point Spread Function is computed by simulations known to the skilled person, using a point source emitting in the monochromatic or polychromatic visible spectrum between 400 nm and 780 nm ($\lambda$), typically in a form of an ideal gaussian ($M^2$=1), centered on the center V10 of the spectacle lens 10. For each wavelength $\lambda$, the point spread function is calculated as the squared magnitude of the inverse Fourier transform of an aperture function P'(x, y) defined as P'(x, y) = A(x, y)exp(ikOPD(x, y)) simulating the simulated aperture P' and where k is the wave number ($2\pi/\lambda$), $\lambda$ the wavelength of the point source preferably equal to 550 nm, A(x, y) is the amplitude of the pupil function that is equal to 1 for (x,y) in the pupil (defined by diameter & center position) and 0 outside the pupil, and OPD(x,y) corresponding to the optical path difference provided by the spectacle lens 10.

On figures 6 and 7, the point spread functions are computed or measured at a wavelength of 550 nm in the first zone 21 and respectively on figures 8-9 the point transfer functions is computed or measured at a wavelength of 550 nm in the second zone 23.

As explained below, the point spread function can be estimated for different eccentricities, for example eccentricities comprised between 4 millimeters and 30 millimeters when the central zone 14 of the spectacle lens 10 is free of any micro-optical element. If the central zone 14 of the spectacle lens 10 comprises micro-optical elements, the point spread function can be further estimated for lower eccentricities, for example comprised between 0 (central gaze direction) and 4 millimeters.

In the present disclosure, the distances described in the projection plane (as shown on figure 4, also called orthographic plane) may also be expressed in angle or angular distance. The angular distance (also known as angular separation) is the angle between the two points or between two objects as viewed from an observer. In other words, the angular distance may be deviated by establishing the angular distance between two spaced points on the spectacle lens defined with respect to a point spaced from the spectacle lens. Typically, here, the angular distance is defined with respect to the center of the pupil of the eye, or with respect to eye rotation center (ERC). In the following example, the angular distance between two point of the spectacle lens is defined with respect to the ERC of the considered eye.

Using the angular distance allows considering dimensions with respect of the eye of the wearer. To this end, in the present disclosure, the angular distance can be measured as being the angle defined in the retina (or the sensor) and the focal of the eye (established as being of 16 mm by convention) (or the focal of the camera lens used).

Consequently, determining the tangent of the angular distance allows determining the angular distance (here the angle considered).

In practice, in the following measurement, the angular distance is expressed as the angular distance spacing two points of the spectacle lens with respect to the ERC.

As the first zone and second zone can be defined on rear face 12 or the front face 12 of the spectacle lens, the distance used to determine (adjacent side) the tangent of the angular distance depends on the distance between the ERC and the rear or font face of the spectacle lens.

As illustrated in figure 5, the spectacle lens 10 comprises the first zone 21 and the second zone 23. It can be seen that each zone 21, 23 further comprises an annular part (referenced as first annular part L21 for the annular part comprised in the first zone 21 and referenced as second annular part L23 for the annular part comprised in the second zone). In the present disclosure, the first annular part is centered on an axis $AX_{21}$ that passes through the center $u_{21}$ of the first zone 21 and that intersects the ERC. The first annular part is defined by successive points of the first zone 21 that are spaced from the axis $AX_{21}$ by an angular distance. For example, when viewing the annular part on the front face or the rear face of the spectacle lens, the points of the first annular part L21 on the rear face or on the front face of the spectacle lens are all spaced from the center $u_{21}$ (or the axis $AX_{21}$) of the first zone 21 by a same distance. In practice, said distance can be expressed by an angular distance corresponding to the angle formed between the center $u_{21}$ (or axis $AX_{21}$) of the first zone 21 and a given point of the annular part (on a face of the spectacle lens) defined with respect to the ERC.

Similarly, the second annular part L23 is centered on an axis $AX_{23}$ that passes through the center $u_{21}$ of the first zone 21 and that intersects the ERC on the center $u_{23}$ of the second zone 23 and is defined by successive points of the first zone 23. On the front face or the rear face of the spectacle lens, the points of the second annular part L23 are all spaced from the center $u_{23}$ (or the axis $AX_{23}$) of the first zone 23 by a same distance (angular distance). In practice, said distance can be expressed by an angular distance corresponding to an angle formed between the center $u_{23}$ of the second zone 23 and a given point of the annular part on a face of the spectacle lens defined with respect to the ERC.

Typically, the first annular part L21 and the second annular part L23 on the front or rear face of the spectacle lens have a closed curve form.

In the present disclosure, each annular part has a form that depends on the curvature of the spectacle lens 10. However, if the spectacle lens 10 is projected into the facial plane (projection plane) perpendicular to the main axis (axis z) of the spectacle lens 10 (as shown in Figure 5), said annular part has a circular form.

Although the first zone has in this embodiment only one annular part L21, the first zone 21 may comprise other annular parts defined by points being at an angular distance from the center $u_{21}$ of the first zone 21. Similarly, the second zone 23 may comprise other annular parts as long as these annular parts are each defined by points that are at an angular distance from the center $u_{23}$ of the first zone 23.

In the present disclosure, although the zones are defined in specific part of the first peripheral zone 15, it is obvious that these zones can be defined in other parts of the spectacle lens 10 as long as this part comprised micro-optical elements.

Figure 6 shows a graphical representation of the point spread function calculated throughout the first zone 21 of the first peripheral zone 15 of the spectacle lens 10. It is also illustrated on this figure 6, a first section plane a21 passing through the first center of the first zone 21 and parallel to the optical axis of the spectacle lens 10 and a third section plane b21 of the first zone 21 passing through the center of the first zone and parallel to the optical axis of the spectacle lens. As illustrated on figure 6, the first section plane and the second section plane are orthogonal.

In the different example, the sensor resolution showing the point spread function is 3840 x 2160 pixels with pixels of 2 μm (in both directions).

Figure 7 shows:

- a first curve 1001 corresponding to the point spread function of the first zone shown on figure 6 along a cross section of the first zone through the first section plane a21 of the first zone.
- a second curve 1002 corresponding the point spread function of the first zone shown on figure 6 along a cross section of the first zone through the third section plane b21 of the first zone.

Figure 8 shows a graphical representation of the point spread function calculated throughout the second zone 23 of the first peripheral zone 15 of the spectacle lens 10. It is also illustrated on this figure 8, a second section plane a23 passing through the first center of the second zone 23 and parallel to the optical axis of the spectacle lens 10 and a fourth section plane b23 of the second zone 23 passing through the center of the second zone and parallel to the optical axis of the spectacle lens.

Figure 9 shows:

- a first curve 2001 corresponding to the point spread function of the second zone shown on figure 8 along a cross section of the second zone through the second section plane a23.
- a second curve 2002 corresponding to the point spread function of the second zone shown on figure 8 along a cross section of the second zone through the fourth section plane b23.

Each of the curves illustrated on figures 7 and 9 reach a maximum $M_q$ with q an index corresponding to the reference sign of the corresponding curve (here $M_{1001}$ for the first curve 1001 measured on the first zone 21 and $M_{1002}$ for the second curve measured on the second zone). In practice, the point spread function of the spectacle lens measured throughout the given zone reaches a maximum (or has a maximum value) that corresponds to the center of the zone on which is measured the point spread function.

As seen above, the distances on the sensor are measured directly from the pixel size (2 $\mu$m x 2 $\mu$m). The same sensor is used in the present disclosure for the different example.

Other measurements can be extracted from the curves shown on figures 7 and 8. Typically, it can also extract full width comprised between 10 percent (10%) and 90 percent (90%) of the maximum of the considered curve including any, 20 percent (20%), 30 percent (30%), 40 percent (40%), 50 percent (50%) corresponding to the full width at half maximum, 60 percent (60%), 70 percent (70%), 80 percent (80%) of the maximum $M_q$ of the considered curve.

The point spread functions of figures 6 and 8 have each a maximum on the center of the given point spread function that corresponds to the value of the point spread function in center of the given zone.

However, in an embodiment, the point spread function of the first zone may have at least one local maximum spaced from the center $u_{21}$ of the first zone 21. Typically, the at least one local maximum may be defined with an angular distance comprised between 0,0107° to 0,0895°, said angular distance being defined between the center of the first zone $u_{21}$ and the position of the given local maximum in the first zone with respect to the ERC. Similarly, the point spread function of the second zone may have at least one local maximum spaced from the center $u_{23}$ of the second zone 23. Typically, the at least one local maximum may be defined with an angular distance comprised between 0,0107° to 0,0895°, said angular distance being defined between the center of the second zone $u_{23}$ and the position of the given local maximum in the second zone with respect to the ERC.

Comparison of the variation of the point spread function along two section planes of a same zone

For the first zone 21, it can be seen on figure 7 that the full width at half maximum $FWHM_{a21}$ of the first curve 1001 of the first zone 21 differs by less than 50%, preferably by less than 40%, or by less than 30%, or by less than 25% than the full width at half maximum $FWHM_{b21}$ of the second curve 1002 of the first zone 21. Similarly, the full width at half maximum $FWHM_{a21}$ of the first curve 1001 of the first zone 21 differs by more than 5%, preferably by more than 10%, or by more than 10%, or by more than 15% of the full width at half maximum $FWHM_{b21}$ of the second curve 1002 of the first zone 21. Especially, on figure 7, it can be seen that the full width at half maximum $FWHM_{a21}$ of the first curve 1001 differs by less 25% (here 24%) of the full width at half maximum $FWHM_{b21}$ of the second curve 1002 of the first zone 21 and differs by more than 15% (here 19%) of the full width at half maximum $FWHM_{b21}$ of the second curve 1002 of the first zone 21. Therefore, the variation of the point spread function defined along the first section plane a21 of the first zone 21 is nearly identical to the variation of the point spread function defined along the third section plane b21 of the first zone 21.

For the second zone 23, it can be seen on figure 9 that the full width at half maximum $FWHM_{a23}$ of the first curve 2001 of the second zone 23 differs by less than 50%, preferably by less than 40%, or by less than 30%, or by less than 25% than the full width at half maximum $FWHM_{b23}$ of the second curve 2002 of the second zone 23. Similarly, the full width at half maximum $FWHM_{a23}$ of the first curve 2001 differs by more than 5%, preferably by more than 10%, or by more than 10%, or by more than 15%, or by more than 20%, or by more 30%, or by more than 35% of the full width at half maximum $FWHM_{b23}$ of the second curve 2002 of the second zone 23. Especially, on figure 9, it can be seen that the full width at half maximum $FWHM_{a23}$ of the first curve 2001 of the second zone 23 differs by less 40% (here 38%) of the full width at half maximum $FWHM_{b23}$ of the second curve 2002 of the second zone 23 and differs by more than 20% (here 28%) of the full width at half maximum $FWHM_{b23}$ of the second curve 2002 of the second zone 23. Therefore, the variation of the point spread function defined along the second section plane a23 of the second zone 23 is nearly identical to the variation of the point spread function defined along the fourth section plane b23 of the second zone 23.

Comparison of the variation of the point spread function along the first section plane of the first zone and along the second section plane of the second zone

By comparing the first curve 1001 associated to the first zone 21 and the first curve 2001 associated to the second zone 23, it can be seen that the full width at half maximum $FWHM_{a21}$ of the first curve 1001 determined in the first zone 21 has at least one of the following features:

- a value that differs by less than 40%, preferably by less than 30%, preferably by less 15% (here by less than 10%) of a full width at half maximum $FWHM_{a23}$ of the first curve 2001 determined in the second zone,
- a value that differs by more than 1%, preferably by more than 5%, preferably by more than 10% (here 10%) of the full width at half maximum $FWHM_{a23}$ of the first curve 2001 determined in the second zone.

Therefore, it can be seen that the variations of point spread function of the first zone 21 defined along the first section plane a21 is nearly identical to the variations of point spread function of the second zone 23 defined along the second section plane a23.

By comparing the first curve 1001 associated to the first zone 21 and the first curve 2001 associated to the second zone 23, it can be seen that the full width at 20% of the maximum $M_{1001}$ of the first curve 1001 of the first zone has at least one of the following features:

- a value that differs by less than 40%, preferably by less than 30%, preferably by less 15% (here by less than 10%) of a full width at 20% of the maximum $M_{2001}$ of the first curve 2001 of the second zone 23,
- a value that differs by more than 1%, preferably by more than 5%, preferably by more than 10% (here 10%) of the full width at 20 percent of the maximum $M_{2001}$ of the first curve 2001 of the second zone 23.

<u>Comparison of the variation of the point spread function along the third section plane of the first zone and along the fourth section plane of the second zone</u>

Similarly, it can be seen that the full width at half maximum $FWHM_{b21}$ of the second curve 1002 of the first zone 21 has at least one of the following features:

- a value that differs by less than 40%, preferably by less than 30%, preferably by less 15% (here by less than 7% or 5%) of a full width at half maximum $FWHM_{b23}$ of the second curve 2002 of the second zone 23,
- a value that differs by more than 1% of the full width at half maximum $FWHM_{b23}$ of the second curve 2002 of the second zone 23.

Therefore, it can be seen that the variations of point spread function of the first zone 21 defined along the third section plane b21 is nearly identical to the variations of point spread function of the second zone 23 defined along the fourth section plane b23.

By comparing the second curve 1002 associated to the first zone 21 and the second curve 2002 associated to the second zone 23, it can be seen that the full width at 20% of the maximum $M_{1002}$ of the second curve 1002 of the first zone 21 has at least one of the following features:

- a value that differs by less than 40%, preferably by less than 30%, preferably by less 15% (here by less than 10%) of a full width at 20% of the maximum $M_{2002}$ of the second curve 2002 of the second zone 23,
- a value that differs by more than 1%, preferably by more than 5%, preferably by more than 10% (here 10%) of the full width at 20 percent of the maximum $M_{2002}$ of the second curve 2002 of the second zone 23.

<u>Second example</u>

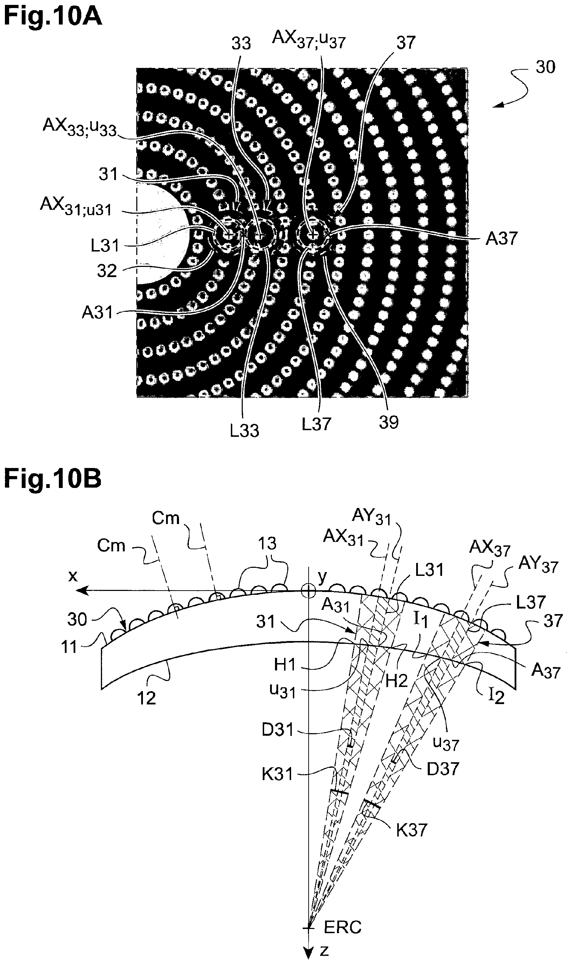

It will be disclosed with reference to figures 10A, 10B and 11, a second example of a spectacle lens 30 according to the present disclosure.

The spectacle lens 30 shows in figures 10A and 10B is identical to the spectacle lens shown on figure 4 except the fact that the spectacle lens 30 comprises eleven concentric rings of micro-optical elements. Therefore, only differences with figure 4 will be disclosed.

In figure 10, the spectacle lens 30 (especially the first peripheral zone of the spectacle lens) comprises a first zone 31 and a second zone 33 and a third zone 37. In this example, the first 31, second 33 and third 37 zones have each micro-optical element covering at least 30 percent of the given zone. Each zone has a center that is distinct from the center of the other zone.

Typically, in this example, the distance between the center of the lens on the rear face (point O) and the center of the first zone 31 is of 7.5 mm, the distance between the center of the lens on the rear face (point O) and the center of the second zone 33 is of 10.1 mm and the distance between the center of the lens on the rear face (point O) and the center of the third zone 37 is of 14.4 mm.

As illustrated in figure 10A, the spectacle lens 30 comprises the first zone 31, the second zone 33 (not shown in this figure) and the third zone 37. It can be seen that each zone further comprises an annular part (referenced as first annular part L31 for the annular part comprised in the first zone 31 and referenced as second annular part L33 for the annular part comprised in the second zone and referenced as third curve L37 for the annular part comprised in the third zone 37).

In the present disclosure, the first annular part L31 is centered on an axis $AX_{31}$ that passes through the center $u_{31}$ of the first zone 31 and that intersects the ERC. The first annular part is defined by points of the first zone 31 spaced from the center of the first zone (here the axis $AX_{31}$) by an angular distance. On the front face or the rear face of the spectacle lens, the points of the first annular part L31 are all spaced from the center $u_{31}$ of the first zone 31 by a same distance (same angular distance). In practice, said distance can be expressed by an angular distance (noted D31 in figure 10B) defined between the center $u_{31}$ of the first zone 31 and a given point of the annular part (here the point A31 of the first annular part L31 that is aligned on an axis $AY_{31}$ that intersects the ERC) with respect to the ERC. In practice, this angular distance D31 corresponds to the half of the diameter of annular part (typically the radius of the annular part L31 when said annular part is projected into the projection plane).

Similarly, the second annular part L33 is defined by points of the first zone 33 that are spaced from the center of the second zone by an angular distance. The second annular part is centered on an axis $AX_{33}$ that passes through the center $u_{33}$ of the second zone 33 and that intersects the ERC. On the rear or the front face of the spectacle lens, the points of the second annular part L33 are all spaced from the center $u_{33}$ of the first zone 33 by a same distance (angular distance). In practice, said distance can be expressed by an angular distance defined between the center $u_{33}$ of the second zone 33 and a given point of the annular part with respect to the ERC. In practice, this angular distance corresponds to the half of the diameter of the second annular part.

In the present disclosure, the third annular part L37 is defined by points of the third zone 37 that are spaced from the center of the third zone (here the axis $AX_{37}$) by an angular distance. The third annular part is centered on an axis $AX_{37}$ that passes through the center $u_{37}$ of the third zone 37 and that intersects the ERC. The points of the third annular part are all spaced from the center $u_{37}$ or the axis $AX_{37}$ of the third zone 37 by a same distance (angular distance). In practice, said distance can be expressed by an angular distance (noted D37 in figure 10B) defined between the center $u_{37}$ of the third zone 37 (the axis $AX_{37}$) and a given point of the third part (here the point A37 of the third annular part L37 that is aligned on an axis $AY_{37}$ that intersects the ERC) with respect to the ERC. In practice, this angular distance D37 corresponds to the half of the diameter of the third annular part.

In the present disclosure, each annular part has a form that depends on the curvature of the spectacle lens 30. However, if the spectacle lens 30 is projected into a projection plane perpendicular to the main axis of the spectacle lens 30, said annular part has a circular form.

In practice, this annular part in three dimensions has (in this example) a truncated cone form arranged to expand along an elongation axis (given the high of the truncated cone). The elongation axis is oriented to intersect the ERC.

Although the first zone has, in this embodiment, only one annular part L31, the first zone 31 may comprise other annular parts as long as these annular parts are each defined by points that are at an angular distance from the center $u_{21}$ (here the axis $AX_{31}$) of the first zone 31. Similarly, the second zone 33 may comprise other annular parts as long as these annular parts are each defined by points that are at an angular distance from the center $u_{23}$ (here an axis passing through the center $u_{33}$ et the ERC) of the first zone 33.

Each annular part belonging to a same zone is defined with a distinct angular distance so as to scan spatially the given zone. For example, if two first annular parts are defined in the first zone, the edges of these two annular parts can be spaced from each other by at least 0.01°, preferably by at least 0.02°. Of course, for the comparison of the integrated values between the first and second zone, said comparison is made only with annular parts defined with a same angular distance.

In the present disclosure, although the zones are defined in specific part of the first peripheral zone, it is obvious that these zones can be defined in other parts of the spectacle lens 10 as long as this part comprised micro-optical elements.

Figure 10B shows only the first zone 31 and the third zone 37 for visibility reasons.

On figure 10B, it can be seen that the dimensions of the first zone 31 can be expressed by an angular distance (noted K31) between two opposed points H1, H2 comprised in the outer outline 32 of the first zone 31 and defined with respect to the ERC. Similarly, the dimensions of the third zone 37 can be expressed by an angular distance (noted K37) between two opposed points I1, I2 comprised in the outer outline 39 of the third zone 37 and defined with respect to the ERC. The first annular part L31 is comprised in the first zone 31 and the third annular part L37 is comprised in the third zone 37.

In the present disclosure, the distance between the rear face of the considered spectacle lens and the ERC defined along the optical axis z of the spectacle lens is of 26 mm. The distance from the pupil of the eye of the wearer to the front face of the spectacle lens is about 13 mm. Similarly, as it is considered that the rear face of the spectacle lens 30 is spherical, the distance between the ERC and the point $u_{31}$ is approximatively of 26 mm and the distance between the ERC and the point $u_{37}$ is approximatively of 26 mm. Same applies for the second zone.

Therefore, the angular distance associated to a given annular part can be found by determining the arctangent of the distance between the center of the given zone and a point of the given annular part divided by the distance between the ERC and the center of the given zone. For example, for the annular part L31, the angular distance is determined with the following formula:

$$angular\_distance\_K37 = arctan(\frac{distance_{A31\_U31}}{distance_{U31\_ERC}}).$$

Comparison of the variation a logarithm of integration of values of the point spread function along annular parts comprised in the first, second and third zones

Figure 11 shows a graphical representation that gives:

- in abscissa, angular distances associated to annular parts, each angular distance corresponding to the angle between the center of the given zone (in which is comprised the given annular part) and a point of the given annular part defined with respect to the ERC (i.e. said angle corresponding to the half of diameter of the given annular part), and
- in ordinate values in logarithm base of the point spread function. In this example, each value in ordinate corresponds to a logarithm of an integration of values of the point spread function along the given annular part having the angular distance given in abscissa.

Therefore, it means that the values given in ordinate have been obtained by integrating all the values of the points spread function defined in the annular part associated to the angular distance define in abscissa.

The figure 11 shows:

- a first curve 1031 corresponding to the variation of values of the integrated (i.e. average) point spread function determined along annular parts comprised in the first zone 31;
- a second curve 1033 corresponding to the variation of values of the integrated point spread function determined along annular parts comprised second zone 33;
- a third curve 1037 corresponding to the variation of values of the integrated point spread function determined along annular parts comprised in the third zone 37.

Each curve can be obtained by defining in a given zone an annular part spaced defined by points spaced from the center of the given zone by an angular distance defined with respect to the ERC. The average point spread function associated to the annular part is determined by integrating all the values of the points spread function defined along the annular part. In practice, it corresponds to integrate the point spread function according to a closed curve (a circle) having a radius having a value that corresponds to the angular distance of the given annular part. Typically, it corresponds to integrate the values of the point spread function along a circle defined by successive points of the point spread function that are spaced from the maximum value of the point spread function (corresponding to the center of the given zone) by an angular distance equal to the angular distance defining the given annular part. Same steps have been performed for other annular parts corresponding to other angular distances. The whole integrated values of the point spread function obtained for the several angular distances gives of the curve shown on figure 11.

Consequently, the comparison between the different zones is made by comparing the values in ordinated of the different curves obtained for a same angular distance. It means that the comparison for the different zones is made by comparing values of the integrated point spread function obtained along annular parts having same dimensions (i.e. for same angular distance).

It is admitted that the point spread function is maximum in the center of the given zone.

In figure 11, the angular distances (corresponding to the half dimension of annular parts) are comprised in the range of 0° to 0.8°.

It is noted that an angular distance of 0,03° corresponds to human visual system resolution.

It can be seen that for angular distances comprised in the range of 0° and 0.2°, the logarithm of an integration of values of the point spread function along the first annular part of the first zone (defined for one of the angular distance comprised between 0° to 0.2°) differs by less than 15% (her less than 10%, especially between 1% and 15 or 10%) from a logarithm of an integration of values of the point spread function along the second annular part of the second zone (defined for one of the angular distance comprised between 0° to 0.2°), said logarithm of an integration of values of the point spread function defined along the first annular part and said logarithm of an integration of values of the point spread function defined along the second annular part being determined for a same angular distance (i.e. it means that the first annular part and the second annular part have a same dimension and/or are defined with a same angular distance). In other words, it means that the values of the first curve 1031 defined in the range of angular distance comprised between 0° and 0.2° differ by less than 15% from the values of the second curve 1033 defined in the range of angular distance comprised between 0° and 0.2°. Similarly, the values of the first curve 1031 defined in the range of angular distance comprised between 0° and 0.2° differ by less than 15% from the values of the third curve 1037 defined in the range of angular distance comprised between 0° and 0.2°.

Same applies in the range of 0.2° to 0.4°. In the range of 0.45° to 0.8° and, the values of the first curves 1031 differ by less than 15% from the values of the second curve 1033 or the third curve 1037.

Third example

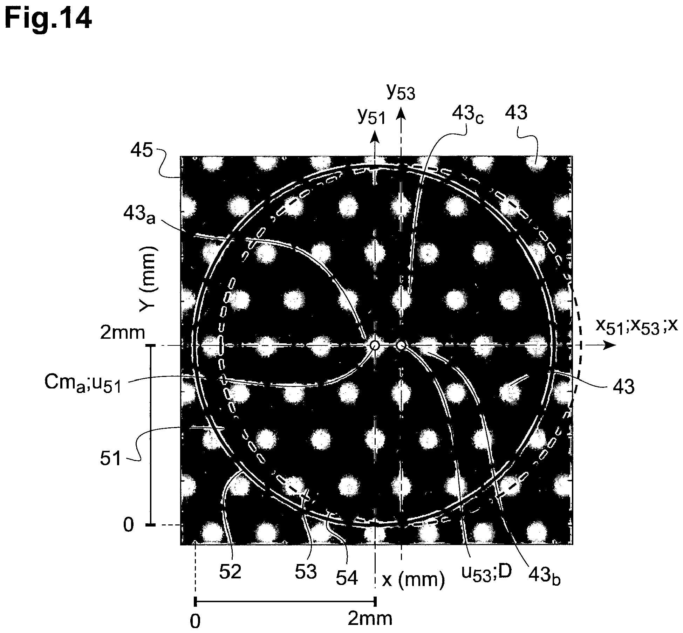

It will be disclosed in relation with figures 13 to 14 a third example of a spectacle lens 40 according to the present disclosure. Only the differences with the first example are disclosed.

In the third example, the spectacle lens 40 is divided in three zones: a central zone 44, a first peripheral zone 45 and a second peripheral zone 46. The first peripheral zone 45 comprises an arrangement of micro-optical elements 43 having at least one optical feature.

The optical feature of the micro-optical elements 43 of first peripheral zone 45 comprises at least one of the following optical features: dioptric power; geometry; refractive, diffractive or diffusive optical function; focal length; diameter or size; position.

The central zone 44, the first peripheral zone 45 and the second peripheral zone 46 are concentric. They are centered on the optical center V40 of the spectacle lens 40. The first peripheral zone 45 surrounds the central zone 44 and is bounded internally by the circular outline 47 of the central zone 44 and externally by a circular outline 48. The second peripheral zone 46 surrounds the first peripheral zone 45 and is bounded internally by the circular outline 48 of the first peripheral zone 45 and externally by a circular outline 49 which coincides with an outer edge of the spectacle lens 40.

The outer circular outline 47 of the central zone 44 presents a diameter of 4 millimeters. The inner circular outline of the first peripheral zone 45 presents a diameter of 4 millimeters. The outer circular outline 48 of the first peripheral zone 45 presents a diameter of 60.0 millimeters. The inner outline of the second peripheral zone 46 presents a diameter of 60.0 millimeters and the outer edge 49 presents a diameter of 70.00 millimeters.

In this embodiment, the micro-optical elements of the spectacle lens 40 are contiguous micro-optical elements of 0.60 millimeters diameter and having a dioptric power of +4 diopters.

The first peripheral zone 45 comprises:

- a first zone 51 ($u_{51}$, $x_{51}$, $y_{51}$) having a circular shape of 4 millimeters diameter; and
- a second zone 53 ($u_{53}$, $x_{53}$, $y_{53}$) having a circular shape of 4 millimeters diameter.

As for the example explained above, the first zone 51, and respectively the second zone 53 comprise each a portion or a part of the micro-optical elements of the first peripheral zone 45. Typically, the micro-optical elements comprised in the first zone 51 are arranged to cover at least 60 percent of the total area of the first zone 51, respectively the micro-optical elements comprised in the second zone 53 are arranged to cover at least 60 percent of the total area of the second zone 53.

The first zone 51 has an outer outline 52 presenting a geometrical center $U_{51}$ that is centered on the micro-optical axis Cma a micro-optical element 43a spaced by 9.8 millimeters from the center V40 of the spectacle lens 40.

The second zone 53 has an outer outline 54 presenting a geometrical center $U_{53}$ that is spaced between 0.10 millimeter and 2.00 millimeters ($\pm$ 0.075mm) from the geometric center $u_{51}$ of the first zone 51. Here, the geometrical center $U_{53}$ is spaced from the geometric center $U_{51}$ of the first zone 21 by 0.30 millimeter ($\pm$ 0.075mm). Especially, the axis $y_{53}$ of the second zone 53 is spaced from 0.30 millimeter from the axis $y_{51}$. The vertical axis $x_{51}$ of the first zone 51 coincides with the main axis x of the spectacle lens 40 and with the axis $x_{53}$ of the second zone 53. It means that the center $u_{53}$ of the second zone 53 is spaced from the center $U_{51}$ of the first zone 51 along the horizontal axes $x_{51}$, $x_{53}$.

The geometric center $u_{51}$ of the first zone 51 is spaced by at least 8.4 millimeters from the geometric center V40 of the spectacle lens 40.

Typically, the geometric center $u_{53}$ is centered on a point D positioned between the edges of two contiguous micro-optical elements noted respectively 43a, 43b. The geometric center $u_{53}$ of the second zone 53 is spaced by at least 8.7 millimeters from the geometric center V40 of the spectacle lens 40.

The technical features, as expressed by the values of the PSF of the first zone 51 and of the second zone 53 of this third example are similar to the ones of the first zone and second zone of the first example.

Fourth example

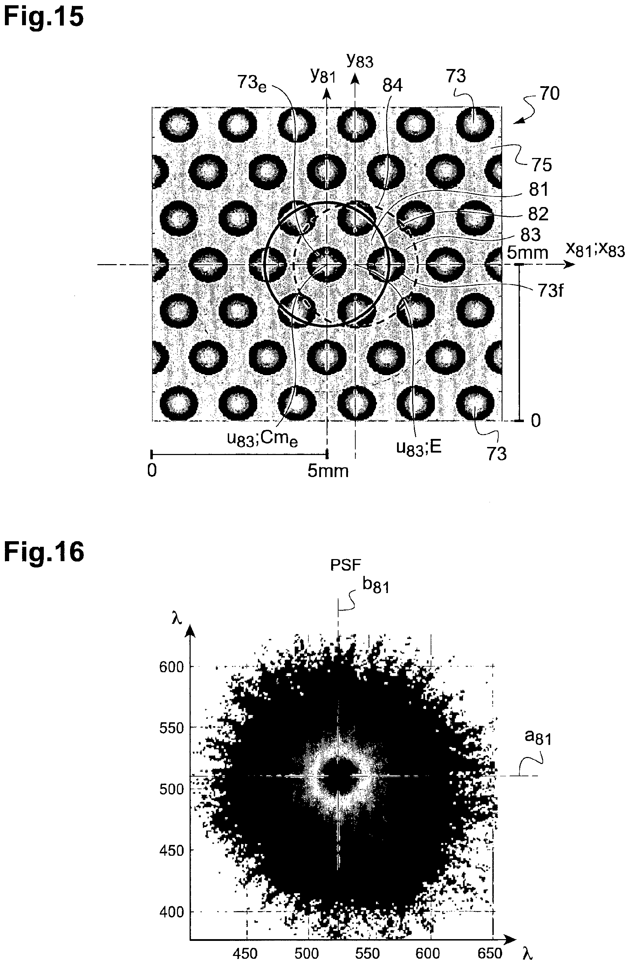

It will be disclosed in relation with figures 15 to 19 a fourth example of a spectacle lens 70 according to the present disclosure. Only the differences with the spectacle lens 10, 30, 40 disclosed above will be described.

The spectacle lens 70 comprises, like the spectacle lens 10, 30 40, a central zone, a first peripheral zone 75 arranged around the central zone and a second peripheral zone arranged around the first peripheral zone 75. Each zone of the spectacle lens 70 are concentric. The central zone and the second peripheral zone are without micro-optical element. In this example, the central zone has an outline having a hexagonal form. Typically, the outline of the central zone has a size defined by a circle (her a circle of 4 millimeters in diameter), which sets within the hexagonal outline of the central zone. Of course, in another embodiment, the outline of the central zone can be circular, as shown on in the first example and in the second example.

The spectacle lens 70 comprises an arrangement of micro-optical elements 73 having a similar shape to the micro-optical elements 13 of the spectacle lens 10. These micro-optical elements 73 are positioned in the first peripheral zone 75 of the spectacle lens 70. For instance, the density of the arrangement of the micro-optical elements over the first peripheral zone 75 of the spectacle lens 70 is comprised between 30 to 70 percent (%) (including any value 40%, 50%, 60%), or between 40 to 70 percent, or between 50 to 70 percent, or between 40 to 60 percent, or between 40 to 50 percent depending on the features of the micro-optical elements 73 (size, geometric shape, refractive, diffractive or diffusive function, etc.). Typically, on the example shown on figure 15 the density of the arrangement of the micro-optical elements over the first peripheral zone 75 of the spectacle lens 70 is comprised between 40 to 60 percent.

In this embodiment, the micro-optical elements 73 of the spectacle lens 70 are all identical. Each micro-optical element 73 have a diameter of 1.12 millimeters and a spherical power of 3.5 diopters. In contrast to the spectacle lens 10 or 40, each micro-optical element 73 is spaced from the adjacent micro-optical elements 73 by at least 0,1 millimeter, or by at least 0.2 millimeter, or by at least 0.3 millimeter, or by at least 0.4 millimeter, or by at least 0.5 millimeter, or by at least 0.6 millimeter, or by at least 0.7 millimeter, or by at least 0.8 millimeter, or by at least 0.9 millimeter, or by at least 1 millimeter. In this example, each micro-optical element 73 is spaced from the adjacent micro-optical elements 73 by at least 0.5 millimeter. For example, the edge of one optical element 73 is spaced from the edge of an adjacent optical element by at least 0.5 millimeter.

Like the spectacle lens 10 or 40, the first peripheral zone 75 of the spectacle lens 70 illustrated by figure 15 comprises a first zone 81 ($u_{81}$, $x_{81}$, $y_{81}$) having a circular shape of 4 millimeters in diameter and a second zone 83 ($u_{83}$, $x_{83}$, $y_{83}$) having a circular shape of 4 millimeters in diameter. The first zone 81 and respectively the second zone 83 comprise each a portion or a part of the micro-optical elements of the first peripheral zone 75. Typically, the micro-optical elements comprised in the first zone 81 are arranged to cover at least 30 percent, or at least 40 percent, or at least 50 percent, or at least 60 percent, or at least 70 percent, of the total area of the first zone 81 and respectively the micro-optical elements comprised in the second zone 83 are arranged to cover at least 30 percent or at least 40 percent, or at least 50 percent, or at least 60 percent, or at least 70 percent of the total area of the second zone 83. Here, the micro-optical elements comprised in the first zone 81 are arranged to cover at least 30 percent of the total area of the first zone 81 and respectively the micro-optical elements comprised in the second zone 83 are arranged to cover at least 30 percent of the total area of the second zone 83.

The first zone 81 has an outer outline 82 presenting a geometrical center $U_{81}$ that is centered on the micro-optical axis Cme a micro-optical element 73e spaced by 9.8 millimeters from the center of the spectacle lens 70.

The second zone 83 has an outer outline 84 presenting a geometrical center Uss that is spaced between 0.10 millimeter and 2.00 millimeters (± 0.075mm) from the geometric center $U_{81}$ of the first zone 81. Here, the geometrical center $U_{83}$ is spaced from the geometric center $U_{81}$ of the first zone 81 by 0.85 millimeter (± 0.075mm). Typically, the geometric center $U_{83}$ is centered on a point E positioned between the edges of two adjacent micro-optical element, the micro-optical element 73e and another micro-optical element numbered 73f. The geometric center $U_{83}$ of the second zone 83 is spaced by at least 8.00 millimeters from the geometric center V70 of the spectacle lens 70. In this example, the axis $x_{81}$ of the first zone 81 coincides with the axis x of the spectacle lens 70 and with the axis $x_{83}$ of the second zone 83. However, the axis $y_{81}$ of the first zone 81 is spaced from 0.85 millimeter from the axis $y_{83}$.

It will be disclosed, with reference to figures 16-19, technical features of the first zone 81 and of the second zone 83. The technical features of the first zone 81 and of the second zone 83 are studied via the point spread function computed or estimated as explained above in the first example.

Figure 16 shows a graphical representation of the point spread function calculated throughout the first zone 81 of the first peripheral zone 75 of the spectacle lens 70. It is also illustrated on this figure 16. It is also illustrated on this figure 16, a first section plane a81 passing through the first center of the first zone 81 and parallel to the optical axis of the spectacle lens 70 and a third section plane b81 of the first zone 81 passing through the center of the first zone and parallel to the optical axis of the spectacle lens.

- a first curve 5001 corresponding to the point spread function of the first zone shown on figure 16 along the cross section of the first zone through the first section plane a81 ; and
- a second curve 5002 corresponding the point spread function of the first zone shown on figure 16 along the cross section of the first zone through the third section plane b81.

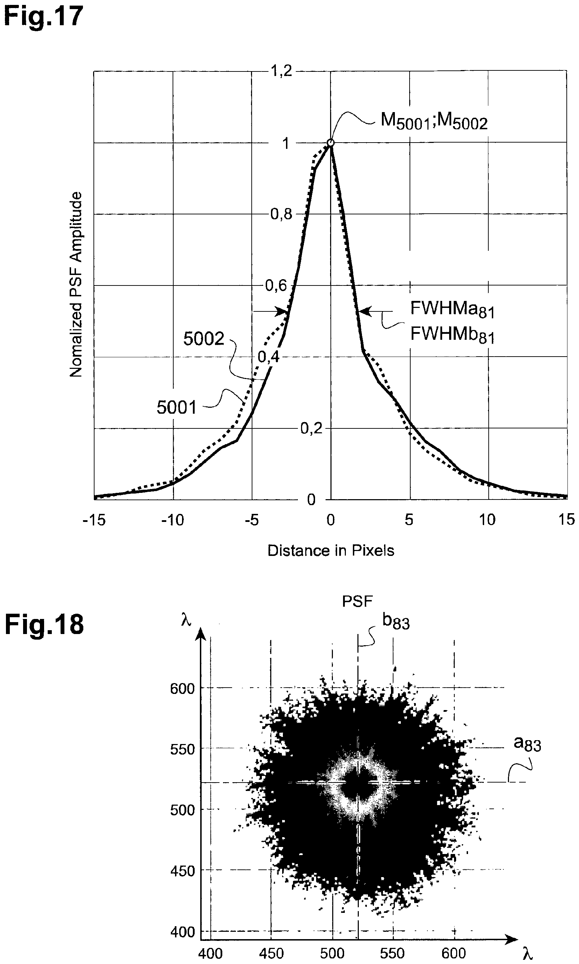

Figure 18 shows a graphical representation of the point spread function calculated throughout the second zone 83 of the first peripheral zone 75 of the spectacle lens 70. It is also illustrated on this figure 18, a second section plane a83 passing through the first center of the second zone 83 and parallel to the optical axis of the spectacle lens 10 and a fourth section plane b83 of the second zone 83 passing through the center of the second zone and parallel to the optical axis of the spectacle lens.

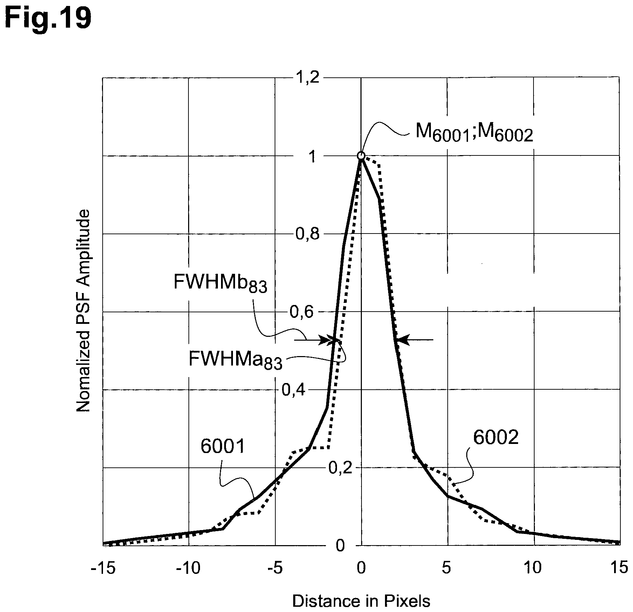

Figure 19 shows:

- a first curve 6001 corresponding to the point spread function of the second zone shown on figure 18 along the cross section of the second zone through the second section plane a83; and
- a second curve 6002 corresponding to the point spread function of the second zone shown on figure 18 along the cross section of the second zone through the fourth section plane b83.

As explained in the first example, other measurements can be extracted from the curves shown on figures 17 and 19. Typically, it can also extract full width comprised between 10 percent (10%) and 90 percent (90%) of the maximum of the considered curve including any, 20 percent (20%), 30 percent (30%), 40 percent (40%), 50 percent (50%), 60 percent (60%), 70 percent (70%), 80 percent (80%) of the maximum $M_q$ of the considered curve.

The point spread functions of figures 16 and 18 have each a maximum on the center of the given point spread function that corresponds to a value of the point spread function in the center of the given zone. The point spread function of the spectacle lens measured over the whole given zone has a maximum value in the center of the given zone.

However, in an embodiment, the point spread function of the first zone may have at least one local maximum spaced from the center $u_{81}$ of the first zone 81. Typically, the at least one local maximum may be defined with an angular distance comprised between 0,0107° to 0,0895°, said angular distance being defined between the center of the first zone $u_{81}$ and the position of the given local maximum in the first zone with respect to the ERC. Similarly, the point spread function of the second zone may have at least one local maximum spaced from the center $u_{83}$ of the second zone 83. Typically, the at least one local maximum may be defined with an angular distance comprised between 0,0107° to 0,0895°, said angular distance being defined between the center of the second zone $u_{83}$ and the position of the given local maximum in the second zone with respect to the ERC.

The range of angular distances from 0,0107° to 0,0895° correspond to a range of distances from 3 to 25$\mu$m defined in the orthographic plane of the considered spectacle lens.

<u>Comparison of the variation of the point spread function along two section planes of a same zone</u>

For the first zone 81, it can be seen on figure 19 that the full width at half maximum $FWHM_{a81}$ of the first curve 5001 of the first zone 81 differs by less than 40%, preferably by less than 30%, or by less than 20%, or by less than 10% or by less than 5% (here less than 5%) of the full width at half maximum $FWHM_{b81}$ of the second curve 5002 of the first zone 81. Similarly, the full width at half maximum $FWHM_{a81}$ of the first curve 5001 of the first zone 81 differs by more than 0.5%, preferably by more than 1% of the full width at half maximum $FWHM_{b81}$ of the second curve 5002 of the first zone 81. Especially, on figure 19, it can be seen that the full width at half maximum $FWHM_{a81}$ of the first curve 5001 of the first zone 81 differs by less 5% of the full width at half maximum $FWHM_{b81}$ of the second curve 5002 of the first zone 81 and differs by more than 0.5% of the full width at half maximum $FWHM_{b81}$ of the second curve 5002 of the first zone 81. Therefore, the variation of the point spread function defined along the first section a81 of the first zone 81 is nearly identical to the variation of the point spread function defined along the second section b81 of the first zone 81.

For the second zone 83, it can be seen on figure 21 that the full width at half maximum $FWHM_{a83}$ of the first curve 6001 of the second zone 83 differs by less than 40%, preferably by less than 30%, or by less than 20%, or by less than 10% than the full width at half maximum $FWHM_{b83}$ of the second curve 6002 of the second zone 83. Similarly, the full width at half maximum $FWHM_{a83}$ of the first curve 6001 of the second zone 83 differs by more than 1%, preferably by more than 5%, or by more than 6% of the full width at half maximum $FWHM_{b83}$ of the second curve 6002 of the second zone 83. Especially, on figure 21, it can be seen that the full width at half maximum $FWHM_{a83}$ of the first curve 6001 of the second zone 83 differs by less 9% (here 8%) of the full width at half maximum $FWHM_{b83}$ of the second curve 6002 of the second zone 83 and differs by more than 6% of the full width at half maximum $FWHM_{b83}$ of the second curve 6002 of the second zone 83. Therefore, the variation of the point spread function defined along the second section a83 of the second zone 83 is nearly identical to the variation of the point spread function defined along the fourth section plane b83 of the second zone 83.

<u>Comparison of the variation of the point spread function along the first section plane of first zone and along the second section plane of the second zone</u>

By comparing the first curve 5001 associated to the first zone 81 and the first curve 6001 associated to the second zone 83, it can be seen that the full width at half maximum $FWHM_{a81}$ of the first curve 5001 determined in the first zone 81 has at least one of the following features:

- a value that differs by less than 40%, preferably by less than 35%, preferably by less 30% (here by less than 30%) of a full width at half maximum $FWHM_{a83}$ of the first curve 6001 determined in the second zone 83,
- a value that differs by more than 10%, preferably by more than 15%, preferably by more than 20% (here 23%) of the full width at half maximum $FWHM_{a83}$ of the first curve 6001 determined in the second zone 83.

By comparing the first curve 5001 associated to the first zone 81 and the first curve 6001 associated to the second zone 83, it can be seen that the full width at 20% of the maximum $M_{5001}$ of the first curve 5001 of the first zone 81 has at least one of the following features:

- a value that differs by less than 40%, preferably by less than 30%, preferably by less 28% of a full width at 20% of the maximum $M_{6001}$ of the first curve 6001 determined in the second zone 83,
- a value that differs by more than 10%, preferably by more than 20%, preferably by more than 25% of the full width at 20 percent of the maximum $M_{6001}$ of the first curve 6001 determined in the second zone 83.

Comparison of the variation of the point spread function along the third section plane of the first zone and along the fourth section plane of the second zone

Similarly, it can be seen that the full width at half maximum $FWHM_{b81}$ of the second curve 5002 of the first zone 81 has at least one of the following features:

- a value that differs by less than 40% of a full width at half maximum $FWHM_{b83}$ of the second curve 6002 of the second zone 83,
- a value that differs by more than 10%, or by more than 20%, of the full width at half maximum $FWHM_{b83}$ of the second curve 6002 of the second zone 83.

By comparing the second curve 5002 associated to the first zone 81 and the second curve 6002 associated to the second zone 83, it can be seen that the full width at 20% of the maximum $M_{5002}$ of the second curve 5002 of the first zone 81 has at least one of the following features:

- a value that differs by less than 40*%, preferably by less than 30%, of a full width at 20% of the maximum $M_{6002}$ of the second curve 6002 of the second zone 83,
- a value that differs by more than 10%, preferably by more than 20%, preferably by more than 23% of the full width at 20 percent of the maximum $M_{6002}$ of the second curve 6002 of the second zone 83.

Fifth example

It will be disclosed with reference to figures 20 and 21, a fifth example of a spectacle lens 80 according to the present disclosure.

Typically, in this example, the distance between the center of the lens on the rear face (point O) and the center of the first zone 86 is of 7.5 mm, the distance between the center of the lens on the rear face (point O) and the center of the second zone 87 is of 10.1 mm and the distance between the center of the lens on the rear face (point O) and the center of the third zone 88 is of 14.4 mm.

The spectacle lens 80 shows in figure 20 is identical to the spectacle lens 70 shown on figure 15 except the fact that the spectacle lens 80 comprises a hexagonal central zone. The micro-optical elements of this spectacle lens 80 are identical to the micro-optical elements of the spectacle lens 70.

In figure 20, the spectacle lens 80 (especially the first peripheral zone of the spectacle lens) comprises a first zone 86 and a second zone 87 and a third zone 88. In this example, the first 86, second 87 and third 88 zones have each micro-optical element covering at least 30 percent of the given zone. Each zone has a center that is distinct from the center of the other zone. It can be seen that each zone further comprises an annular part (referenced as first annular part L86 for the the first zone 86 and referenced as second annular part L87 for the second zone 87 and referenced as third annular part L88 for the third zone 88).

As explained for the other example, each annular part associated to a given zone is centered on axis that passes through the center of this zone and that intersect the ERC. Each annular part is defined by points of the given zone that intersects the ERC. The points of the given annular part are all spaced from the center of the given zone by a same distance. In practice, said distance can be expressed by an angular distance defined between the center of the given zone and a point of the annular part. Here, this angular distance corresponds to the half of the diameter of the given annular part.

The distance between the rear face of the lens 80 and the ERC is similar to the one used previously (for the second example).

Figure 21 shows a graphical representation that gives:

- in abscissa, angular distances associated to annular parts, each angular distance corresponding to the angle between the center of the given zone (in which is comprised the given annular part) and a point of the given annular part defined with respect to the ERC, and
- in ordinate values in logarithm base of the point spread function. In this example, each value in ordinate corresponds to a logarithm of an integration of values of the point spread function along the given annular part having the angular distance given in abscissa.

The figure 21 shows:

- a first curve 7001 corresponding to the variation of values of the integrated (i.e. average) point spread function determined along annular parts comprised in the first zone 86;
- a second curve 7002 corresponding to the variation of values of the integrated point spread function determined along annular parts comprised second zone 87;
- a third curve 7003 corresponding to the variation of values of the integrated point spread function determined along annular parts comprised in the third zone 88.

It can be seen that for angular distances comprised in the range of 0° and 0.2°, the logarithm of an integration of values of the point spread function along the first annular part of the first zone (defined for one of the angular distance comprised between 0° to 0.2°) differs by less than 15% (here by less 10%, for example between 1% and 10%, 15%) from a logarithm of an integration of values of the point spread function along the second annular part of the second zone (defined for one of the angular distance comprised between 0° to 0.2°), said logarithm of an integration of values of the point spread function defined along the first zone and said logarithm of an integration of values of the point spread function defined along the second zone being determined for a same angular distance (i.e. it means that the first annular part and the second annular part have a same dimension and/or are defined with a same angular distance).
In other words, it means that the values of the first curve 7001 defined in the range of angular distance comprised between 0° and 0.2° differ by less than 15% from the values of the second curve 7002 defined in the range of angular distance comprised between 0° and 0.2°.
For angular distances comprised in the range of 0° and 0.2°, the logarithm of an integration of values of the point spread function along a first annular part of the first zone (defined for one of the angular distance comprised between 0° to 0.2°) differs by less than 15% (here by less 10%, for example between 1% and 10%, 15%) from a logarithm of an integration of values of the point spread function along the third annular part of the third zone (defined for one of the angular distance comprised between 0° to 0.2°), said logarithm of an integration of values of the point spread function defined along the first annular part and said logarithm of an integration of values of the point spread function defined along the third annular part being determined for a same angular distance (i.e. it means that the first annular part and the third annular part have a same dimension and/or are defined with a same angular distance).
Similarly, the values of the first curve 7001 defined in the range of angular distance comprised between 0° and 0.2° differ by less than 15% from the values of the third curve 7003 defined in the range of angular distance comprised between 0° and 0.2°.
Same applies in the range of 0.2° to 0.35°. In the range of 0.36° to 0.45° and of 0.55° and 0.88°, the values of the first curves differ by less than 15% from the values of the second curve 7002 or the third curve 7003.

Sixth example:

In a sixth example the spectacle lens comprises only diffusing micro-optical elements. Each diffusive micro-optical element is adapted for scattering the light. For example, a collimated light is scattered in a cone with an apex angle ranging from +/-1° to +/- 40°. In an example, the diffusive micro-optical elements are adapted to scatter light locally, i.e. at the intersection between the given micro-optical element and the wavefront arriving on the given micro-optical element. The micro-optical elements having a diffusive optical function may be similar to the micro-optical elements described in the document US10302962.
The figure 22 represents a expended view of a part of the spectacle lens according to sixth example. In figure 22 a first zone 91, a second zone 93 and a third zone 97 are represented.
Typically, in this example, the distance between the center of the lens on the rear face (point O) and the center of the first zone 91 is of 7.5 mm, the distance between the center of the lens on the rear face (point O) and the center of the second zone 93 is of 10.1 mm and the distance between the center of the lens on the rear face (point O) and the center of the third zone 97 is of 14.4 mm.
As illustrated in figure 22, it can be seen that each zone further comprises an annular part (referenced as first annular part L91 for the first zone 91 and referenced as second annular part L93 for the second zone 93 and referenced as third annular part L97 for the third zone 97).

Figure 23 shows a graphical representation that gives:

- in abscissa, angular distances associated to annular parts, each angular distance corresponding to the angle between the center of the given zone (in which is comprised the given annular part) and a point of the given annular part defined with respect to the ERC (i.e. said angle corresponding to the half of dimension of the given annular part), and
- in ordinate values in logarithm base of the point spread function. In this example, each value in ordinate corresponds to a logarithm of an integration of values of the point spread function along the given annular part having the angular distance given in abscissa.

The figure 23 shows:

- a first curve 8001 corresponding to the variation of values of the integrated (i.e. average) point spread function determined along annular parts comprised in the first zone 91;
- a second curve 8002 corresponding to the variation of values of the integrated point spread function determined along annular parts comprised second zone 93;
- a third curve 8003 corresponding to the variation of values of the integrated point spread function determined along annular parts comprised in the third zone 97.

It can be seen that for angular distances comprised in the range of 0° (preferably of 0.01°) and 0.2°, the logarithm of an integration of values of the point spread function along the first annular part of the first zone (defined for one of the angular distance comprised between 0°(preferably of 0.01°) to 0.2°) differs by less than 15% (here by less 10%, for example between 0.1% and 10%, 15%) from a logarithm of an integration of values of the point spread function along the second annular part of the second zone (defined for one of the angular distance comprised between 0° to 0.2°), said logarithm of an integration of values of the point spread function defined along the first zone and said logarithm of an integration of values of the point spread function defined along the second zone being determined for a same angular distance (i.e. it means that the first annular part and the second annular part have a same dimension and/or are defined with a same angular distance).

In other words, it means that the values of the first curve 8001 defined in the range of angular distance comprised between 0° and 0.2° differs by less than 15% from the values of the second curve 8002 defined in the range of angular distance comprised between 0° and 0.2°.

For angular distances comprised in the range of 0° (preferably of 0.01°) and 0.2°, the logarithm of an integration of values of the point spread function along a first annular part of the first zone (defined for one of the angular distance comprised between 0° (preferably of 0.01°) to 0.2°) differs by less than 15% (here by less 10%, for example between 0.1% and 10%, 15%) from a logarithm of an integration of values of the point spread function along the third annular part of the third zone (defined for one of the angular distance comprised between 0° to 0.2°), said logarithm of an integration of values of the point spread function defined along the first annular part and said logarithm of an integration of values of the point spread function defined along the third annular part being determined for a same angular distance (i.e. it means that the first annular part and the third annular part have a same dimension and/or are defined with a same angular distance).

Similarly, the values of the first curve 8001 defined in the range of angular distance comprised between 0° (preferably 0.01°) and 0.2° differ by less than 15% from the values of the third curve 8003 defined in the range of angular distance comprised between 0° (preferably 0.01°) and 0.2°.

Same applies in the range of angular distances comprised between 0.2° and 0.8°.

Method for determining parameters of a spectacle lens

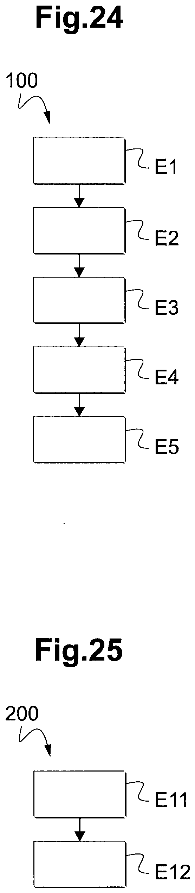

Figure 24 shows a computer-implemented method 100 for determining a spectacle lens 10, 30, 40, 70, 80, 90 as disclosed above in the first example, in the second example, in the third example or in the fourth or in the fifth example or in the sixth example. It means that the method 100 is implemented by a computer. The computer may be a processor, a calculation module or a calculator or a calculation unit. In other words, it means that computer may be a processor or a central processing unit (CPU) or any electronic device allowing to implement a succession of commands and/or calculations. Typically, the computer comprises a processor, a memory and different input and output interfaces.

The spectacle lens 10, 30, 40, 70, 80, 90 is intended to be worn by a wearer.

A pair of spectacle lenses 10, 30, 40, 70, 80, 90 are intended to be integrated in a frame of an eyeglasses or eyewear.

The computer implemented method comprises:

- defining E1 a first zone 21, 31, 51, 81,86, 91 comprising a plurality of micro-optical elements 13, 43, 73 arranged to cover at least 30 percent of the total area of the first zone 21, 31, 51, 81, 86, 91;
- defining E2 a second zone 23, 33, 53, 83, 87, 93 comprising a plurality of micro-optical elements 13, 43, 73 arranged to cover at least 30 percent of the total area of the second zone 23, 33, 53, 83, 87, 93,

the first 21, 31, 51, 81,86, 91 and second 23, 33, 53, 83, 87, 93 zones are different,

- determining E3 the point spread function of the first zone and the point spread function of the second zone, the center of each zone being defined as the point of maximum value of a point spread function of the given zone
- defining E4 in each zone, at first annular part centered on the first center of the first zone and defined by points of the first zone that are at a first angular distance from the center of the first zone and a second annular part centered on the second center of the second zone and defined by points of the second zone that are at a second angular distance from the center of the second zone,
- determining E5 a shape, a size and a location of each micro-optical element 13, 43, 73 in the first zone 21, 31, 51, 81, 86, 91 and second zone 23, 33, 53, 83, 87, 93 so that a logarithm of an integration of values of the point spread function along the first annular part of the first zone differs by less than 15% from a logarithm of an integration of values of the point spread function along the second annular part of the second zone, the first and second angular distances being equal.

If the logarithm of an integration of values of the point spread function along the first annular part of the first zone differs by less than 15 percent (preferably by less than 10 percent) from the logarithm of an integration of values of the point spread function along the second annular part of the second zone, the features of the given zone and/or the optical features of the micro-optical elements of the first and second zones are validated to be the micro-optical elements of the first and second zones of a manufactured spectacle lens 10, 30, 40, 70, 80, 90.

The steps E4 and E5 can be reiterated so as to carried out the step of determining for annular parts having angular distances comprised between 0.01° and 0.20°.

Typically, the steps E4 and E5 are reiterated at least two times to validate the feature of the zone. In other words, it means that at least two annular parts per zone are determined so as to performed two times the step of determining E5. in practice, the computer implemented method 100 is carried out successively by changing the optical features of the micro-optical elements 13, 43, 73 of the first 21, 31, 51, 81, 86, 91 and second 23, 33, 53, 83, 87, 93 zones and/or the features of the given zone (position, size, orientation) and by comparing logarithms of integration of values of the point spread function along several first annular parts of the first zone with logarithms of integration of values of the point spread function along several second annular parts of the second zone, each value compared between the first and second zones being determined with a same angular distance.

When the micro-optical elements of the first and second zones are validated, the computer implemented process 100 is configured to spatially scan the surface of the optical design of the spectacle lens 10, 30, 40, 70, 80, 90 by adding a third zone arranged around the first zone and a fourth zone arranged around the second zone. Typically, the third zone has an outline having a size and/or a shape that differs from the outline of the first zone and respectively the fourth zone has an outline having a size and/or a shape that differs from the outline of the second zone.

The step of defining E4 end determining E5 are performed for each zone and can be reiterated.

Once again, two other zones, a fifth and sixth zones are defined.

Typically, the fifth zone has an outline having a size and/or a shape that differs from the outline of the first zone and from the outline of the third zone, and respectively the sixth zone has an outline having a size and/or a shape that differs from the outline of the second zone and from the outline of the fourth zone.

The optical features of these zones are determined like the first and second zone and like the third and fourth zones.

Therefore, successively zones are thus defined so as to scan spatially the whole area of the spectacle lens 10, 30, 40, 70, 80, 90 (typically the whole area of the first peripheral zone 15, 45, 75) to determine the optical design of the micro-optical elements 13, 43, 73 covering the surface of the spectacle lens 10, 30, 40, 70, 80, 90.

Figure 25 shows a method 200 for manufacturing the spectacle lens 10, 30, 40, 70, 80, 90 (i.e. a physical lens element).

The method 200 comprises all the step of the method 100 disclosed above. Typically, the method 200 for manufacturing the spectacle lens 10, 30, 40, 70, 80, 90 comprises:

- a step of determining E11 a design of the lens element using the computer-implemented method using the method 100 disclosed above,
- a step of manufacturing E12 the lens element following the design.

Claims

1. Spectacle lens comprising at least:

- a first zone comprising a plurality of micro-optical elements arranged to cover at least 30 percent of the total area of the first zone, and
- a second zone comprising a plurality of micro-optical elements arranged to cover at least 30 percent of the total area of the second zone,
wherein the first zone is different from the second zone, and
wherein the first zone comprising at least one first annular part defined by points of the first zone that are at a first angular distance from the first center of the first zone and the second zone comprising at least one second annular part defined by points of the second zone that are at a second angular distance from the second center of the second zone, the first center of the first zone being defined as a point of maximum value of a point spread function of the spectacle lens over the first zone, the second center of the second zone being defined as a point of maximum value of the point spread function of the spectacle lens over the second zone, a logarithm of an integration of values of the point spread function along the first annular part of the first zone differs by less than 15% from a logarithm of an integration of values of the point spread function along the second annular part of the second zone, the first angular distance and the second angular distance being equal.

2. Spectacle lens according to claim 1, wherein the first and second angular distances are comprised between 0.01° and 0.20°, said angular distance being defined with respect to the eye rotation center.

3. Spectacle lens according to claim 1 or 2, wherein the first center and the second center are distinct one from the other.

4. Spectacle lens according to any one of claims 1 to 3, wherein
the micro-optical elements of the first zone and the micro-optical elements of the second zone are also arranged such that,

- the point spread function of the first zone has at least one local maximum located at an angular distance, from the first center, comprised between 0,0107° and 0,0895 ° and/or
- the point spread function of the second zone has at least one local maximum located at an angular distance, from the second center, comprised between 0,0107° and 0,0895°.

5. Spectacle lens according to any one of claims 1 to 4, wherein the micro-optical elements of the first zone and the micro-optical elements of the second zone are arranged in such a way that the point spread function of the first zone defined along a cross section of the first zone through a first section plane passing through the first center of the first zone and parallel to an optical axis of the spectacle lens has a full width at half maximum that differs by less than 40% from a full width at half maximum of the point spread function of the second zone defined along a cross section of the second zone through a second section plane passing through the second center of the second zone and parallel to the optical axis of the spectacle lens.

6. Spectacle lens according to claim 5, wherein the point spread function of the first zone along the cross section of the first zone through the first section plane has a full width at half maximum that differs by more than 10% from the full width at half maximum of the point spread function of the second zone along the cross section of the second zone through the second section plane.

7. Spectacle lens according to the claim 5 or 6, wherein, the point spread function of the first zone along the cross section of the first zone through the first section plane has a full width at 20 percent of a maximum of the point spread function of the first zone along the cross section of the first zone through the first section plane that has at least one of the following features:

- a value that differs by less than 40% from a full width at 20 percent of the maximum of the point spread function of the second zone along the cross section of the second zone through the second section plane,
- a value that differs by more than 5% from the full width at 20 percent of the maximum of the point spread function of the second zone along the cross section of the second zone through the second section plane.

8. Spectacle lens according to any one of claims 5 to 7, wherein, the micro-optical elements of the first zone and the micro-optical elements of the second zone are arranged in such a way that the point spread function of the first zone defined along a further cross section of the first zone through a third section plane passing through the first center of the first zone and parallel to an optical axis of the spectacle lens has a full width at half maximum that has at least one of the following features:

- a value that differs by less than 40% from a full width at half maximum of the point spread function of the second zone defined along a further cross section of the second zone through a fourth section plane of the second zone passing through the second center of the second zone and parallel to the optical axis of the spectacle lens;
- a value that differs by more than 10% from the full width at half maximum of the point spread function of the second zone defined along the further cross section of the second zone through the fourth section plane of the second zone.

9. Spectacle lens according to claim 8, wherein the point spread function of at least one of the zones among the first zone and the second zone has a main peak and at least two secondary peaks positioned on both sides of the main peak.

10. Spectacle lens according to any one of claims 1 to 9, wherein the orthographic projection of the first zone on a projection plane perpendicular to an optical axis of the spectacle lens and the orthographic projection of the second zone on the projection plane have different shapes or different sizes.

11. Spectacle lens according to claim 10, wherein a geometrical center of the orthographic projection of the first zone is spaced by at least 0.5 millimeter from a geometrical center of the orthographic projection of the second zone.

12. Spectacle lens according to any one of claims 1 to 11, wherein:

- the density of the micro-optical elements of the first zone differs by less than 5% from a density of the micro-optical elements of the second zone, and/or
- an average mean optical power of at least one of the micro-optical elements of the first zone is different from an average mean optical power of at least one of the micro-optical elements of the second zone, and/or
- an optical function of at least one of the micro-optical elements of the first zone is different from an optical function of the at least one of micro-optical elements of the second zone and/or
- a diameter of at least one of the micro-optical elements of the first zone differs by less than 5% from a diameter of at least one of the micro-optical elements of the second zone.

13. Spectacle lens according to any one of claims 1 to 12, wherein at least one of the micro-optical elements of the first zone and/or the second zone comprises at least one of the following features:

- an average mean optical power value comprised between 1 diopter and 10 diopters;
- a refractive optical function, a diffractive optical function or a diffusive optical function.

14. Spectacle lens according to any one of claims 1 to 13, wherein the micro-optical elements of the first zone are arranged according to a first pattern comprising at least two first concentric rings of micro-optical elements, a first of the at least two first concentric rings of micro-optical elements being spaced from a second of the at least two first concentric rings of micro-optical elements by at least 1 millimeter and/or the micro-optical elements of the second zone are arranged according to a second pattern comprising at least two second concentric rings of micro-optical elements, a first of the at least two second concentric rings of micro-optical elements being spaced from a second of the at least two second concentric rings of micro-optical elements by at least 1 millimeter.

15. Spectacle lens according to any one of claims 1 to 14, wherein at least one of the micro-optical elements of the first zone is spaced from at least another of the micro-optical elements of the first zone or of the micro-optical elements of the second zone by at least 0,3 millimeter.

## Fig.1

## Fig.2

## Fig.3

**Fig.4**

**Fig.5**

## Fig.6

## Fig.7

# Fig.8

# Fig.9

**Fig.10A**

**Fig.10B**

# Fig.11

# Fig.12

# Fig.13

## Fig.14

**Fig.15**

**Fig.16**

# Fig.17

Distance in Pixels

# Fig.18

PSF

# Fig.19

# Fig.20

# Fig.21

# Fig.22

# Fig.23

# Fig.24

100

| | |
|---|---|
| | E1 |

↓

| | |
|---|---|
| | E2 |

↓

| | |
|---|---|
| | E3 |

↓

| | |
|---|---|
| | E4 |

↓

| | |
|---|---|
| | E5 |

# Fig.25

200

| | |
|---|---|
| | E11 |

↓

| | |
|---|---|
| | E12 |

Europäisches
Patentamt

European
Patent Office

Office européen
des brevets

# EUROPEAN SEARCH REPORT

Application Number

EP 23 31 5255

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/146857 A1 (HONES JR PETER [US] ET AL) 12 May 2022 (2022-05-12)<br>* figures 9A, 9B *<br>* paragraphs [0007] – [0009], [0020], [0061], [0107] – [0114], [0128], [0132], [0133] *<br>* paragraph [0168] * | 1-15 | INV.<br>G02C7/02 |
| X | WO 2022/136056 A1 (ESSILOR INT [FR]) 30 June 2022 (2022-06-30)<br>* figure 1 *<br>* page 2, line 10 – line 24 *<br>* page 5, line 4 – line 19 *<br>* page 7, line 8 – page 8, line 7 *<br>* page 9, line 26 *<br>* page 10, line 7 – line 20 * | 1-15 | |
| X | US 11 226 497 B2 (BRIEN HOLDEN VISION INSTITUTE LTD [AU]) 18 January 2022 (2022-01-18)<br>* column 4, line 20 – column 5, line 18 *<br>* column 7, line 3 – line 9 *<br>* column 10, line 50 – column 11, line 23 *<br>* column 23, line 43 – column 28, line 15 *<br>* column 49, line 61 – column 50, line 2 * | 1-15 | TECHNICAL FIELDS SEARCHED (IPC)<br><br>G02C |
| X | WO 2022/201749 A1 (HOYA LENS THAILAND LTD [TH]; QI HUA [JP]) 29 September 2022 (2022-09-29)<br>* the whole document * | 1-15 | |

The present search report has been drawn up for all claims

| Place of search | Date of completion of the search | Examiner |
|---|---|---|
| Munich | 7 December 2023 | Vazquez Martinez, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 481 477 A1**

## ANNEX TO THE EUROPEAN SEARCH REPORT
## ON EUROPEAN PATENT APPLICATION NO.

EP 23 31 5255

07-12-2023

| Patent document cited in search report | | | Publication date | Patent family member(s) | | Publication date |
|---|---|---|---|---|---|---|
| US 2022146857 | A1 | | 12-05-2022 | CN | 113661434 A | 16-11-2021 |
| | | | | EP | 3931626 A1 | 05-01-2022 |
| | | | | US | 2022146857 A1 | 12-05-2022 |
| | | | | WO | 2020180817 A1 | 10-09-2020 |
| WO 2022136056 | A1 | | 30-06-2022 | CN | 116601550 A | 15-08-2023 |
| | | | | EP | 4268011 A1 | 01-11-2023 |
| | | | | WO | 2022136056 A1 | 30-06-2022 |
| US 11226497 | B2 | | 18-01-2022 | AU | 2017351635 A1 | 23-05-2019 |
| | | | | AU | 2022283726 A1 | 02-02-2023 |
| | | | | CN | 110226118 A | 10-09-2019 |
| | | | | CN | 114637129 A | 17-06-2022 |
| | | | | EP | 3532891 A1 | 04-09-2019 |
| | | | | JP | 7308749 B2 | 14-07-2023 |
| | | | | JP | 2020500328 A | 09-01-2020 |
| | | | | JP | 2023134558 A | 27-09-2023 |
| | | | | KR | 20190076005 A | 01-07-2019 |
| | | | | SG | 10202107685Y A | 30-08-2021 |
| | | | | SG | 11201903710Q A | 30-05-2019 |
| | | | | US | 2020073147 A1 | 05-03-2020 |
| | | | | US | 2023034749 A1 | 02-02-2023 |
| | | | | US | 2023039493 A1 | 09-02-2023 |
| | | | | WO | 2018076057 A1 | 03-05-2018 |
| WO 2022201749 | A1 | | 29-09-2022 | CN | 116783542 A | 19-09-2023 |
| | | | | JP | 2022146279 A | 05-10-2022 |
| | | | | WO | 2022201749 A1 | 29-09-2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10302962 B